(19) Europäisches Patentamt

European Patent Office

Office européen des brevets

(11) **EP 1 717 673 A1**

(12) **DEMANDE DE BREVET EUROPEEN**

(43) Date de publication:
**02.11.2006 Bulletin 2006/44**

(51) Int Cl.:
***G06F 3/033*** (2006.01)

(21) Numéro de dépôt: **05290953.8**

(22) Date de dépôt: **29.04.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(71) Demandeur: **UNIVERSITE PIERRE ET MARIE CURIE (PARIS VI)**
**75005 Paris (FR)**

(72) Inventeurs:
• **Bouchon-Meunier, Bernadette**
**75015 Paris (FR)**

• **Poitrenaud, Sébastien**
**75001 Paris (FR)**
• **Manier, Samuel**
**94370 Sucy en Brie (FR)**
• **Tijus, Charles**
**75003 Paris (FR)**

(74) Mandataire: **Laget, Jean-Loup**
**Cabinet PEUSCET**
**161, rue de Courcelles**
**75017 Paris (FR)**

(54) **Procédé d'affichage d'un ensemble d'éléments graphiques**

(57) Procédé d'affichage d'un ensemble d'éléments graphiques sur un moyen d'affichage, caractérisé en ce qu'il comprend les étapes consistant à :

a. Afficher lesdits éléments graphiques dans une zone d'affichage déterminée dudit moyen d'affichage dans une configuration initiale ;

b. Recevoir une commande de sélection portant sur un élément graphique affiché dans ladite zone d'affichage et désigner un ensemble à redimensionner en fonction de ladite commande de sélection ;

c. Déterminer une nouvelle configuration desdits éléments graphiques, ladite nouvelle configuration comportant une position de chaque élément graphique dudit ensemble à redimensionner dans ladite zone d'affichage ;

d. redimensionner chaque élément graphique dudit ensemble à redimensionner de manière que ledit ensemble à redimensionner dans la nouvelle configuration déterminée à l'étape c) remplisse au moins l'une des dimensions de ladite zone d'affichage tout en restant entièrement affiché dans ladite zone d'affichage.

FIG.7

**Description**

La présente invention a pour objet un procédé de génération d'une interface graphique convenant pour afficher une représentation graphique d'un ensemble d'entités numériques et un procédé d'affichage d'un ensemble d'éléments graphiques sur un moyen d'affichage.

Au sens de l'invention, un élément graphique désigne toute représentation d'un contenu cognitif sur un moyen d'affichage. Un moyen d'affichage couvre tous les dispositifs électroniques de formation d'une image, tels que, par exemple, les écrans à tube cathodique, les écrans à cristaux liquides et les vidéos projecteurs.

L'utilisateur d'un dispositif électronique, tel que, par exemple, un ordinateur, une tablette numérique, un assistant numérique personnel ou un téléphone mobile, est confronté à la difficulté de se servir dans une même session de plusieurs entités numériques, et de pouvoir les consulter et les traiter aisément. L'invention a pour but de l'aider dans cette tâche.

Le gestionnaire de fichier intégré aux systèmes d'exploitations Windows® de Microsoft® permet de générer une interface graphique représentant d'une part l'arborescence d'un ensemble de dossiers contenant des fichiers mémorisés dans un ordinateur et d'autre part la liste des fichiers contenus dans un dossier sélectionné au moyen d'un pointeur. Cependant, cette interface graphique ne permet pas de visualiser le contenu cognitif des fichiers. De plus, le contenu d'un seul dossier peut être visualisé. Si un utilisateur souhaite afficher le contenu d'un fichier, une deuxième interface graphique sous la forme d'une fenêtre représentant le contenu du fichier est générée, cette deuxième interface graphique étant indépendante de la première interface graphique, ce qui signifie, entre autre, que sa position sur l'écran est déterminée de manière indépendante de la position de la première interface graphique. En outre, si un utilisateur souhaite visualiser le contenu d'un deuxième fichier, une troisième interface graphique indépendante des deux autres est générée. Un utilisateur utilisant un tel système d'affichage doit donc déterminer lui-même la configuration des fenêtres qu'il souhaite visualiser, notamment lorsque plusieurs fenêtres doivent être visibles simultanément, et n'a aucun moyen pour retourner de manière simple à un affichage précédent, par exemple dans le cas où il réduit le nombre de fenêtres sur l'écran.

Une interface graphique de ce type n'est donc pas pleinement satisfaisante du point de vue de l'ergonomie. En particulier, lorsque la structure arborescente des dossiers correspond à une organisation logique du contenu cognitif des fichiers contenus dans cette arborescence, par exemple aux chapitres et sous chapitres d'un document, cette interface offre une représentation du contenu cognitif d'un fichier hors de tout contexte, sous la forme d'une fenêtre qui peut être placée n'importe où à l'écran indépendamment des autres contenus affichés. Lorsque l'utilisateur veut visualiser plusieurs contenus simultanément, l'empilement des fenêtres à l'écran nécessite des manipulations fastidieuses avant d'arriver à une représentation satisfaisante. Ces manipulations sont à refaire à chaque ouverture ou fermeture d'une fenêtre.

Ces interfaces graphiques connues présentent donc globalement les mêmes inconvénients qu'un classeur dans lequel sont rangés des feuillets. Dans le classeur, les feuillets sont bien ordonnés mais difficilement consultables simultanément. Sortis du classeur, les feuillets sont rapidement mélangés et superposés et demandent finalement des manipulations fastidieuses lors de leur consultation.

L'invention a pour premier but de proposer une interface graphique plus ergonomique qui permette d'afficher une représentation graphique d'un ensemble d'entités numériques organisées. Un autre but de l'invention est de créer une interface graphique qui permette de consulter chaque partie d'un ensemble de contenus cognitifs organisés sans perdre de vue l'information relative au contexte de la partie de contenu cognitif consultée.

Un autre but de l'invention est de créer une interface graphique qui permette une navigation aisée et réversible dans un ensemble de contenus cognitifs organisés.

Pour cela, l'invention propose, selon un premier objet, un procédé de génération d'une interface graphique convenant pour afficher une représentation graphique d'un ensemble d'entités numériques, comportant les étapes consistant à :

a) Mettre à disposition d'une machine numérique un ensemble d'entités numériques dans lequel chaque entité numérique dudit ensemble comprend un contenu cognitif à afficher et une liste de références désignant des entités numériques dudit ensemble, ladite liste de références pouvant désigner aucune, une ou plusieurs entité(s) numérique(s), ledit ensemble d'entités numériques comprenant une entité numérique identifiée en tant qu'entité numérique d'entrée,

b) engendrer une interface graphique affichable sur un écran et comprenant un élément graphique représentant ladite entité numérique d'entrée et au moins un élément graphique représentant chaque entité numérique désignée directement ou indirectement par ladite entité numérique d'entrée ; une première entité numérique étant considérée comme désignée indirectement par une deuxième entité numérique lorsque ladite deuxième entité numérique désigne ladite première entité numérique par l'intermédiaire d'au moins deux références successives ; lesdits éléments graphiques comprenant à chaque fois une zone de contenu convenant pour afficher le contenu cognitif des entités qu'ils représentent, ladite interface graphique étant engendrée :

c) en produisant ledit élément graphique représentant l'entité numérique d'entrée et

d) en produisant, à l'intérieur de ladite zone de contenu de chaque élément graphique produit précédemment, un élément graphique respectif représentant chaque entité numérique désignée directement par l'entité numérique représentée par ledit élément graphique produit précédemment.

Tout accès à une entité numérique, c'est-à-dire à un contenu cognitif déterminé, se fait à l'aide d'une référence. Les références permettent d'organiser les entités numériques et donc les contenus qu'elles incluent sous la forme d'un graphe de forme quelconque. Grace à ce procédé, l'organisation graphique des éléments graphiques reflète l'organisation des entités numériques créée par les références.

Selon un mode de réalisation de l'invention, à l'étape a), chaque entité numérique dudit ensemble comprend des paramètres d'affichage prédéterminés associés respectivement à chacune desdites entités numériques désignées par ladite liste de références, et définissant à chaque fois une disposition prédéterminée de l'élément graphique devant représenter ladite entité numérique désignée associée, et en ce que, à l'étape d), ledit élément graphique respectif est produit à chaque fois à l'intérieur de ladite zone de contenu de l'élément graphique produit précédemment dans la disposition prédéterminée définie par lesdits paramètres d'affichage prédéterminés associés à l'entité numérique représentée par ledit élément graphique respectif. Ainsi, à l'aide des paramètres d'affichage, on donne une apparence déterminée à l'élément graphique dans lequel le contenu d'une entité numérique doit être affiché, ce qui permet à l'utilisateur de s'habituer à cette apparence et de la reconnaître. Comme les paramètres d'affichage sont liés à l'entité numérique parente, l'apparence de l'élément graphique d'une entité donnée peut-être différente selon l'élément graphique parent dans lequel il est affiché, ce qui permet de rendre compte visuellement de la référence particulière par laquelle on accède au contenu de l'entité numérique. Ces paramètres d'affichage définissent de préférence une disposition par défaut permettant de rendre réversibles les modifications de l'interface graphique lors de la navigation.

L'utilisation de références permet de désigner une entité numérique dans plusieurs entités sans dupliquer les données de contenu correspondantes. Dans le cas où une entité est désignée plusieurs fois, elle est représentée dans l'interface graphique par plusieurs éléments graphiques. Chaque référence permet de visualiser l'entité numérique dans un contexte particulier. Chaque élément graphique reflète les attributs propres à l'entité numérique représentée, mais selon des points de vue et dans des contextes propres à chaque référence : plusieurs éléments graphiques représentant une même entité numérique peuvent apparaître simultanément sur l'écran à des positions et tailles différentes.

Selon un mode de réalisation de l'invention, ladite disposition prédéterminée est conçue de manière que les éléments graphiques représentant toutes lesdites entités numériques désignées directement dans l'entité numérique représentée par ledit élément graphique produit précédemment soient placés sans recouvrement dans la zone de contenu dudit élément graphique produit précédemment.

Avantageusement, ladite disposition prédéterminée inclut une taille d'élément graphique prédéterminée qui est définie par rapport à une taille de zone de contenu de l'élément graphique produit précédemment à l'intérieur duquel ledit élément graphique respectif est produit.

Avantageusement, ladite disposition prédéterminée inclut des coordonnées de position par défaut qui définissent une position de l'élément graphique respectif par rapport à la zone de contenu de l'élément graphique produit précédemment à l'intérieur duquel ledit élément graphique respectif est produit.

Selon un mode de réalisation de l'invention, l'étape d) comprend les étapes consistant à,

e) sélectionner un élément graphique produit précédemment ;

f) produire un élément graphique respectif pour représenter chaque entité numérique désignée dans la liste de références de l'entité numérique représentée par ledit élément graphique sélectionné ;

g) déterminer une disposition de chaque élément graphique produit à l'étape f), à l'intérieur de ladite zone de contenu de l'élément graphique sélectionné ;

h) répéter les étapes e) à g) pour un autre élément graphique produit précédemment s'il en existe.

Selon un mode de réalisation de l'invention, ladite disposition est déterminée en fonction des paramètres d'affichage contenus dans l'entité numérique représentée par l'élément graphique sélectionné et associés à l'entité numérique représentée par ledit élément graphique produit à l'étape f).

De préférence, ladite entité numérique d'entrée n'est désignée par aucune entité numérique dudit ensemble.

Avantageusement, ladite liste de références ne désigne à chaque fois ni l'entité numérique à laquelle ladite liste de référence appartient, ni une entité numérique désignant directement ou indirectement ladite entité numérique à laquelle ladite liste de référence appartient.

Selon un mode de réalisation de l'invention, une entité numérique comprend un facteur de forme, chaque élément graphique représentant ladite entité numérique étant produit avec une forme correspondante audit facteur de forme.

Dans un mode de réalisation de l'invention, ledit élément graphique est rectangulaire, ledit facteur de forme étant un rapport entre la hauteur et la largeur dudit élément graphique.

Avantageusement, une entité numérique comporte une couverture incluant des données de contenu cognitif relatives à ladite entité numérique, et en ce qu'un élément graphique représentant ladite entité numérique est affichable dans un état ouvert rendant visible ledit ou lesdits élément(s) graphique(s) respectif produits à l'intérieur de la zone de contenu dudit élément graphique et dans un état fermé rendant visible ladite couverture dans ladite zone de contenu dudit élément graphique.

Selon un mode de rélisation de l'invention, le procédé comprend les étapes consistant à :

- produire un marqueur affichable pour sélectionner un élément graphique dans ladite interface graphique ;
- produire dans l'interface graphique un menu affichable comprenant au moins une référence désignant au moins un élément graphique de ladite interface graphique, ledit élément graphique désigné par ladite référence représentant à chaque fois une entité numérique désignant directement l'entité numérique représentée par ledit élément graphique sélectionné par ledit marqueur, ladite référence étant activable pour provoquer l'affichage dudit élément graphique désigné par ladite référence avec, à l'intérieur de la zone de contenu dudit élément graphique désigné, un élément graphique nouvellement sélectionné par ledit marqueur, ledit élément graphique nouvellement sélectionné par ledit marqueur représentant la même entité numérique que l'élément graphique anciennement sélectionné par ledit marqueur.

Avantageusement, lors de l'affichage dudit élément graphique désigné par ladite référence, la taille dudit élément graphique nouvellement sélectionné est sensiblement égale à la taille dudit élément graphique anciennement sélectionné.

De préférence, lors de l'affichage dudit élément graphique désigné par ladite référence, la position dudit élément graphique nouvellement sélectionné est sensiblement égale à la position dudit élément graphique anciennement sélectionné.

Selon un mode de réalisation de l'invention, le procédé comprend les étapes consistant à :

p) produire un marqueur affichable pour sélectionner un élément graphique dans ladite interface graphique ;
q) produire un moyen d'entrée de commande de repliement apte à recevoir une commande de repliement d'un utilisateur pour provoquer l'exécution des étapes consistants à :
r) modifier l'élément graphique sélectionné par ledit marqueur pour que ledit élément graphique sélectionné apparaisse dans un état réduit prédéterminé dans ladite interface graphique,
s) déterminer une nouvelle configuration d'un ensemble à redimensionner constitué, s'il en existe, du ou des autres éléments graphiques contenus directement dans la zone de contenu d'un élément graphique parent qui contient directement l'élément graphique sélectionné, un premier élément graphique étant considéré comme contenu directement dans la zone de contenu d'un second élément graphique lorsque ledit premier élément graphique représente une entité numérique désignée directement par l'entité numérique représentée par ledit second élément graphique, ladite nouvelle configuration comportant une position et une taille de chaque élément graphique dudit ensemble à redimensionner dans la zone de contenu de l'élément graphique parent, de manière que ledit ensemble à redimensionner remplisse au moins l'une des dimensions de ladite zone de contenu tout en restant entièrement affiché dans ladite zone de contenu.

Avantageusement, tout élément graphique contenu directement ou indirectement dans la zone de contenu d'un élément graphique de l'ensemble à redimensionner est modifié d'un seul tenant avec ledit élément graphique de l'ensemble à redimensionner.

De préférence, à l'étape s), chaque élément graphique de l'ensemble à redimensionner est redimensionné sans déformation.

Selon un mode de réalisation de l'invention, le procédé comprend les étapes consistant à produire un marqueur affichable pour sélectionner un élément graphique dans ladite interface graphique, produire un moyen d'entrée de commande de zoom apte à recevoir une commande de zoom d'un utilisateur pour provoquer l'exécution des étapes consistant à :

- agrandir l'élément graphique sélectionné par ledit marqueur d'un coefficient d'agrandissement C prédéterminé ;
- déplacer l'élément graphique sélectionné vers le centre de la zone de contenu de l'élément graphique contenant directement l'élément graphique sélectionné ;
- déplacer et agrandir tout élément graphique contenu dans ladite zone de contenu d'un seul tenant avec ledit élément graphique sélectionné.

Selon un mode de réalisation de l'invention, le procédé comprend les étapes consistant à produire un marqueur affichable pour sélectionner un élément graphique dans ladite interface graphique, et à produire un moyen d'entrée de commande de projection apte à recevoir une commande de projection d'un utilisateur pour provoquer l'exécution des étapes consistant à :

- redimensionner le contenu cognitif affiché dans la zone de contenu de l'élément graphique sélectionné, de manière que ledit contenu cognitif remplisse au moins une dimension de la zone de contenu d'un élément graphique parent contenant ledit élément graphique sélectionné.

Avantageusement, ledit élément graphique parent est l'élément graphique qui contient directement l'élément graphique sélectionné.

De préférence, l'élément graphique parent est l'élément graphique représentant l'entité numérique d'entrée.

L'invention a également pour objet un programme d'ordinateur comportant des codes d'instructions aptes à être lus ou écrit sur un support et aptes à être exécutés par une machine numérique pour mettre en oeuvre les étapes du procédé selon l'une des revendications 1 à 30.

L'invention a également pour objet un support d'enregistrement destiné à la mise en oeuvre du procédé tel que revendiqué dans la revendication 1 et sur lequel est enregistré un ensemble d'entités numériques destinées à être représentées par des éléments graphiques, dans lequel chaque entité numérique dudit ensemble comprend :

- une liste de références désignant des entités numériques dudit ensemble, ladite liste de références pouvant désigner aucune, une ou plusieurs entité(s) numérique(s) ;
- un contenu cognitif à afficher ;
- des paramètres d'affichages prédéterminés associés respectivement à chacune desdites entités numériques désignées par ladite liste de références, et définissant à chaque fois une disposition prédéterminée pour un élément graphique représentant graphiquement ladite entité numérique désignée associée à l'intérieur d'un élément graphique représentant l'entité numérique à laquelle ladite liste de référence appartient.

Une des idées de base de l'invention est de créer une représentation des contenus isomorphe à la structure des données matérialisant ces contenus. Une autre idée de base de l'invention est de créer pour l'utilisateur l'impression de se « déplacer » dans l'interface graphique plutôt que de déplacer les éléments graphiques formant cette interface, c'est-à-dire de permettre de nombreuses modifications des éléments graphiques qui sont visualisés sur un écran, qui constituent autant de parties de l'interface graphique, sans modifier l'organisation globale de l'interface graphique, de manière à permettre à tout moment un retour automatique à l'affichage initial.

Une interface graphique du type connu cité en premier lieu n'est pas non plus pleinement satisfaisante du point de vue de la navigation. En effet, lorsqu'un utilisateur souhaite visualiser le contenu d'un fichier, une fenêtre est générée, dont la taille et la position sont indépendantes des autres fenêtres qui peuvent être déjà visibles sur l'écran. Dans ce cas, si l'utilisateur souhaite visualiser plusieurs fichiers simultanément, il doit lui-même déterminer la nouvelle configuration de ces fenêtres. En général, cela entraîne une modification importante de la disposition relative des fenêtres les unes par rapports aux autres, ce qui complique pour l'utilisateur le repérage des différentes fenêtres sur l'écran. Si l'utilisateur ne souhaite pas ou peu modifier la disposition relative des fenêtres les unes par rapport aux autres, il se trouve contraint de réduire fortement la taille des fenêtres de manière à libérer de la place. En outre, lorsque la taille d'une fenêtre est réduite, une partie du contenu cognitif de la fenêtre n'est généralement plus visible à l'écran, ce qui diminue la lisibilité de son contenu.

Un second but de l'invention est de proposer un procédé de détermination des paramètres d'affichage d'un ensemble d'éléments graphiques qui permette d'adapter automatiquement les paramètres d'affichage des éléments graphiques en fonction de la demande d'un utilisateur.

Pour cela, l'invention propose, selon un second objet, un procédé d'affichage d'un ensemble d'éléments graphiques destinés à représenter un contenu cognitif sur un moyen d'affichage, caractérisé en ce qu'il comprend les étapes consistant à :

a) Afficher lesdits éléments graphiques dans une zone d'affichage déterminée dudit moyen d'affichage dans une configuration initiale comportant une position initiale de chaque élément graphique ;
b) Recevoir une commande de sélection portant sur un élément graphique affiché dans ladite zone d'affichage et désigner un ensemble à redimensionner comprenant au moins un desdits éléments graphiques en fonction de ladite commande de sélection ;
c) Déterminer une nouvelle configuration desdits éléments graphiques, ladite nouvelle configuration comportant une position de chaque élément graphique dudit ensemble à redimensionner dans ladite zone d'affichage ;
d) redimensionner chaque élément graphique dudit ensemble à redimensionner de manière que ledit ensemble à redimensionner dans la nouvelle configuration déterminée à l'étape c) remplisse au moins l'une des dimensions de ladite zone d'affichage tout en restant entièrement affiché dans ladite zone d'affichage.

Grâce à ce procédé, selon la demande de l'utilisateur, le contenu des éléments graphiques est affiché à la plus grande taille possible pour préserver leur lisibilité.

Avantageusement, lorsque ledit ensemble à redimensionner comporte plusieurs éléments graphiques, ladite nouvelle configuration est définie de manière que chaque élément graphique dudit ensemble à redimensionner soit adjacent à au moins un autre desdits éléments graphiques dudit ensemble à redimensionner.

Selon un mode de réalisation de l'invention, ledit ensemble à redimensionner comportant un nombre N d'éléments graphiques, l'étape c) comprend une étape e) consistant à former un ensemble de configurations de rang N, chacune desdites configurations de rang N comportant une position de chacun des N éléments graphiques dudit ensemble à redimensionner dans ladite zone d'affichage, et une étape f) consistant à sélectionner ladite nouvelle configuration dans ledit ensemble de configurations de rang N.

Selon un mode de réalisation de l'invention, dans lequel ladite zone d'affichage est rectangulaire, l'étape f) comprend les étapes consistant à, déterminer, pour chacune desdites configurations de rang N, un rectangle circonscrivant lesdits éléments graphiques dudit ensemble à redimensionner positionnés dans ladite configuration de rang N, calculer pour chaque configuration de rang N un rapport de largeur entre la largeur de ladite zone d'affichage et la largeur dudit rectangle et un rapport de hauteur entre la hauteur de ladite zone d'affichage et la hauteur dudit rectangle, déterminer, pour chaque configuration de rang N, un rapport minimum parmi ledit rapport de largeur et ledit rapport de hauteur de ladite configuration de rang N, et sélectionner comme nouvelle configuration la configuration de rang N dont ledit rapport minimum est maximal.

Avantageusement, l'étape e) comprend les étapes consistant, pour un entier k allant successivement de 0 à N-1,

m) sélectionner une configuration de rang k déjà formée, chaque configuration interne de rang k étant définie par un k-uplet de positions associées respectivement à k éléments graphiques de ladite zone d'affichage,

g) sélectionner un k+1ième élément graphique dans ledit ensemble à redimensionner qui n'est pas positionné dans ladite configuration de rang k sélectionnée,

h) sélectionner au moins une position pour le k+1ième élément graphique dans ladite zone d'affichage,

i) former au moins une configuration interne de rang k+1 en combinant ladite au moins une position sélectionnée pour le k+1ième élément graphique avec ladite configuration de rang k sélectionnée.

Selon un mode de réalisation de l'invention, les éléments graphiques étant des polygones, l'étape h) comprend les étapes consistant à sélectionner un sommet d'un des k éléments graphiques positionnés dans ladite configuration de rang k, la position du k+1ième élément graphique étant sélectionnée en positionnant un sommet dudit k+1ième élément graphique sur ledit sommet sélectionné de manière qu'un bord dudit k+1ième élément graphique se trouve le long d'un bord dudit élément graphique auquel appartient ledit sommet sélectionné et que ledit k+1ième élément ne chevauche pas ledit élément graphique auquel appartient ledit sommet sélectionné.

De préférence, l'étape e) comprend une étape consistant à éprouver, pour chaque configuration de rang i ayant été formée, i étant un entier compris entre 1 et N, une condition d'affichage, et une étape consistant à effacer ladite configuration de rang i si ladite condition d'affichage n'est pas vérifiée, ladite condition d'affichage incluant une condition de non-chevauchement qui est vérifiée lorsque aucun élément graphique positionné dans ladite configuration de rang i ne chevauche un autre élément graphique positionné dans ladite configuration de rang i.

De préférence, l'étape e) comprend une étape consistant à éprouver, pour chaque configuration de rang i ayant été formée, i étant un entier compris entre 1 et N, une condition d'affichage, et une étape consistant à effacer ladite configuration de rang i si ladite condition d'affichage n'est pas vérifiée, ladite condition d'affichage incluant une condition d'angle qui est vérifiée lorsque l'angle entre la droite reliant le centre d'un premier élément graphique positionné dans ladite configuration de rang i et le centre d'un deuxième élément graphique positionné dans ladite configuration de rang i et la droite reliant le centre dudit deuxième élément graphique positionné dans ladite configuration de rang i et le centre dudit premier élément graphique à ladite position initiale est inférieur à un angle S prédéterminé.

Selon un mode de réalisation de l'invention, le procédé comprend les étapes consistant à éprouver une condition d'existence de configuration qui est vérifiée lorsque l'ensemble des configurations de rang N obtenu à l'issue de l'étape e) est non vide, et si la condition de configuration n'est pas vérifiée, augmenter la valeur de l'angle S et répéter l'étape e).

Selon un mode de réalisation de l'invention, dans lequel chaque élément graphique est affichable dans un état réduit prédéterminé et dans un état déployé, lorsque ladite commande de sélection porte sur un élément graphique affiché dans ledit état déployé dans ladite zone d'affichage à l'étape a), il comporte l'étape consistant à réduire ledit élément graphique sélectionné, de manière que ledit élément graphique sélectionné apparaisse dans ledit état réduit prédéterminé, ledit ensemble à redimensionner étant désigné comme l'ensemble constitué du ou des élément(s) graphique(s) affiché(s) dans l'état déployé contenu(s) dans ladite zone d'affichage à l'étape a) et autre(s) que ledit élément graphique sélectionné.

Avantageusement, chaque élément graphique étant affichable dans un état réduit prédéterminé et dans un état déployé, lorsque la commande de sélection porte sur un élément graphique affiché dans ledit état réduit dans ladite zone d'affichage à l'étape a), ledit ensemble à redimensionner est désigné comme l'ensemble constitué d'une part du ou des élément(s) graphique(s) affiché(s) dans l'état déployé contenu(s) dans ladite zone d'affichage à l'étape a) et d'autre part dudit élément graphique sélectionné, ledit élément graphique sélectionné étant affiché dans l'état déployé dans ladite nouvelle configuration.

Selon un mode de réalisation de l'invention, dans lequel l'ensemble à redimensionner comprend ledit élément graphique sélectionné, les étapes c) et d) sont réalisées sous la forme d'une séquence de sous-étapes, chaque sous-étape de la séquence comprenant une étape j) consistant à déterminer un nombre maximum Z d'itérations tel que les dimensions de l'élément graphique sélectionné multipliées par un coefficient d'agrandissement C prédéterminé élevé à la puissance Z soient inférieures ou égales aux dimensions correspondantes de ladite zone d'affichage, de manière que ledit élément graphique sélectionné puisse être entièrement affiché dans ladite zone d'affichage, et chaque sous-étape de la séquence comprenant une étape k) consistant si le nombre Z est positif, à multiplier les dimensions dudit élément graphique par ledit coefficient d'agrandissement C, à déterminer une distance D entre le centre dudit élément graphique sélectionné et le centre de ladite zone d'affichage et à rapprocher le centre dudit élément graphique du centre de ladite zone d'affichage d'une distance sensiblement égale à la distance D divisée par le nombre maximum Z.

De préférence, chaque sous-étape de la séquence est effectuée en réponse à la réception d'une commande venant d'un périphérique d'entrée.

Selon un mode de réalisation de l'invention, lesdits éléments graphiques comportent à chaque fois une zone de contenu convenant pour afficher un contenu cognitif et, qu'à l'étape d) tout le contenu de la zone de contenu d'un élément graphique dudit ensemble à redimensionner est redimensionné dans les mêmes proportions que ledit élément graphique.

Avantageusement, à l'étape d), chaque élément graphique est redimensionné sans déformation.

L'invention a également pour objet un programme d'ordinateur comportant des codes d'instructions aptes à être lus ou écrits sur un support et aptes à être exécutés par une machine numérique pour mettre en oeuvre les étapes consistant à :

- mettre à disposition de ladite machine numérique un ensemble d'éléments graphiques affichables à l'intérieur d'une zone d'affichage déterminée d'un moyen d'affichage dans une configuration initiale comportant une position initiale de chaque élément graphique dans ladite zone d'affichage ;
- recevoir une commande de sélection portant sur un des éléments graphiques depuis un périphérique d'entrée dudit ordinateur et désigner un ensemble à redimensionner comprenant au moins un desdits éléments graphiques en réponse à ladite commande ;
- déterminer une nouvelle configuration desdits éléments graphiques, ladite nouvelle configuration comportant une position de chaque élément graphique dudit ensemble à redimensionner dans ladite zone d'affichage avec un dimensionnement de chaque élément graphique dudit ensemble à redimensionner, de manière que ledit ensemble à redimensionner dans ladite nouvelle configuration remplisse au moins l'une des dimensions de ladite zone d'affichage tout en restant entièrement affichable dans ladite zone d'affichage.

Les deux objets précités peuvent être mis en oeuvre séparément ou en combinaison, sans sortir du cadre de la présente invention.

L'invention sera mieux comprise, et d'autre buts, détails, caractéristiques et avantages de celle-ci apparaîtront plus clairement au cours de la description explicative détaillée qui va suivre, de plusieurs modes de réalisation de l'invention donnés à titre d'exemple purement illustratifs et non limitatifs, en référence aux dessins schématiques annexés.

Sur ces dessins :

- la figure 1 est une vue schématique d'un ordinateur programmé au moyen d'un logiciel selon un mode de réalisation de l'invention pour afficher une représentation d'un ensemble d'entités numériques sous la forme d'une interface graphique ;
- la figure 2 est un graphe représentant les entités numériques mémorisées dans l'ordinateur de la figure 1 ;
- la figure 3 est un arbre représentant les éléments graphiques obtenus à partir des entités numériques de la figure 2 ;
- la figure 4 est une vue schématique de l'interface graphique de navigation comprenant les éléments graphiques de l'arbre de la figure 3 ;
- la figure 5 est un schéma fonctionnel représentant les étapes du procédé de construction de l'arbre de la figure 3 ;
- la figure 6 est une vue schématique de l'interface graphique selon un deuxième exemple de réalisation ;
- la figure 7 est une vue similaire à la figure 6, après repliement de l'un des éléments graphiques ;
- la figure 8 est un schéma fonctionnel représentant les étapes du procédé de repliement permettant d'aboutir à l'affichage de la figure 7 ;
- les figures 9a à 9h sont des vues schématiques montrant des configurations virtuelles construites au cours du procédé de la figure 8 ;
- la figure 10a est une vue schématique montrant en superposition deux configurations construites au cours du procédé de la figure 8 pour deux nombres d'éléments graphiques différents ;
- la figure 10b est une vue schématique d'une configuration obtenue par le procédé de la figure 8 montrant le rectangle circonscrivant la configuration ;
- la figure 11 est une vue schématique de l'interface graphique de la figure 6 après une opération de zoom ;
- la figure 12 est un schéma fonctionnel représentant les étapes du procédé de zoom permettant d'obtenir l'affichage de la figure 11.

- la figure 13 est un schéma fonctionnel représentant les étapes du procédé de zoom inverse ;
- la figure 14 est un diagramme de principe représentant le contenu d'une entité numérique ;
- la figure 15 est un diagramme de principe représentant le contenu d'un élément graphique ;
- les figures 16 est une vue réduite de l'interface graphique de la figure 4 après une opération de projection d'un élément graphique dans son élément graphique parent ;
- la figure 17 est un arbre représentant les éléments graphiques obtenus à partir d'un autre ensemble d'entités numériques ;
- la figure 18 est un schéma fonctionnel représentant les étapes du procédé de projection ;
- la figure 19 est un schéma fonctionnel représentant les étapes du procédé de projection inverse ;
- les figures 20 et 21 sont des vues schématiques d'une interface graphique comprenant les éléments graphiques de l'arbre de la figure 17 dans deux états successifs montrant deux contextes d'une même entité ;
- la figure 22 est une vue schématique montrant l'interface graphique de la figure 20 avec des éléments graphiques dans un état fermé ; et
- la figure 23 est une vue schématique montrant une interface graphique d'édition.

Un mode de réalisation de l'invention sera décrit dans ce qui suit en combinant les deux objets de l'invention, mais ils peuvent être mis en oeuvre indépendamment l'un de l'autre.

On considère un ensemble organisé d'entité numériques qui peuvent par exemple être des documents numériques (texte, images, vidéos, documents multimédias), le résultat d'applications logicielles (traitement de texte, tableur, gestionnaire de base de données, navigateur pour Internet, messagerie électronique) ou des dossiers (ensemble de documents). Ces entités numériques constituent un corpus de données de contenus, qui comportent un contenu cognitif auquel on veut donner accès. Dans ce qui suit, on va décrire une structure particulière des entités numériques ainsi qu'une interface graphique construite à partir de ces entités numériques pour permettre de visualiser leur contenu cognitif. On va aussi décrire différentes fonctionnalités de cette interface graphique permettant de « naviguer » dans les contenus cognitifs stockés dans les entités numériques, c'est-à-dire de visualiser sélectivement telles ou telles parties de ces contenus. Dans la suite, les différents traitements sont décrits en référence à des entités numériques. Il est clair que ces traitements ne dépendent en principe pas de la nature du contenu cognitif en question. A titre illustratif, des applications possibles de ces entités numériques sont la réalisation d'un livre de cours électronique, d'un cartable électronique, d'un atlas électronique, d'un agenda électronique, d'un annuaire électronique, d'un catalogue électronique, d'un gestionnaire de fichiers général, etc.

Les procédés décrits sont mis en oeuvre au moyen d'une programmation correspondante de l'ordinateur. Dans ce qui suit, on considère que l'ordinateur a accès aux entités numériques, par exemple dans le disque dur de l'ordinateur ou dans tout moyen de stockage relié à l'ordinateur, par exemple un réseau informatique.

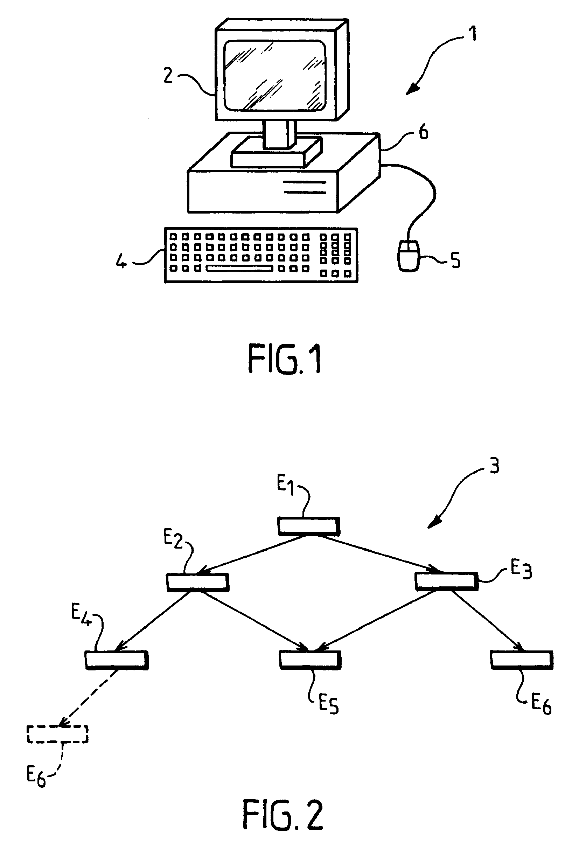

En se référant à la figure 1, on voit un ordinateur 1 comportant de manière classique un écran 2, un clavier 4, une souris 5 et une unité centrale 6. L'unité centrale 6 comporte par exemple une carte mère (non représentée) et un disque dur (non représenté). Un système d'exploitation standard permet de gérer l'affichage et les périphériques.

## Organisation des entités

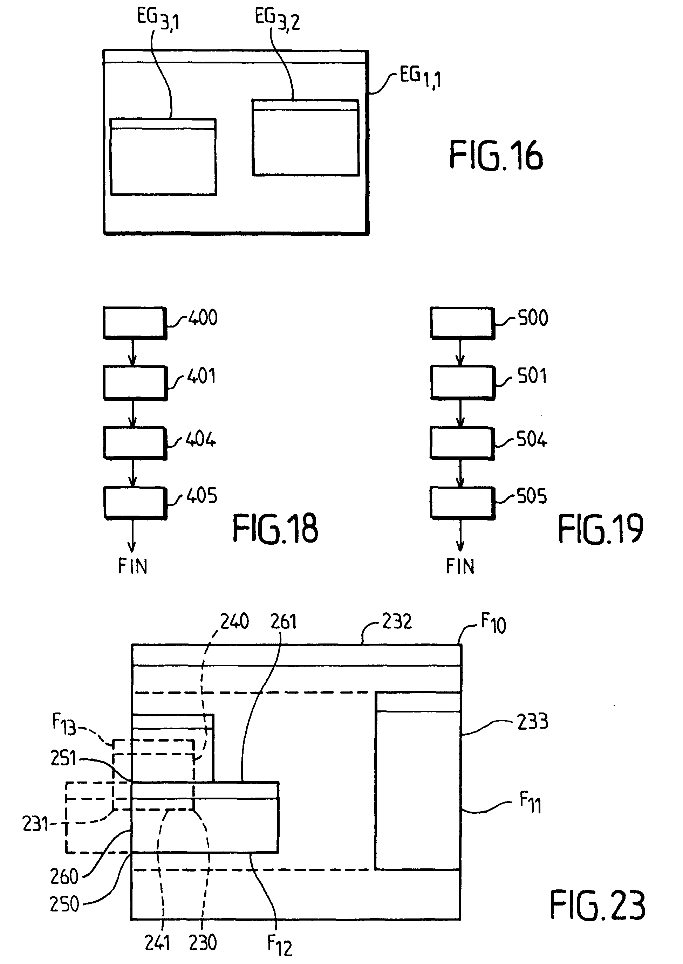

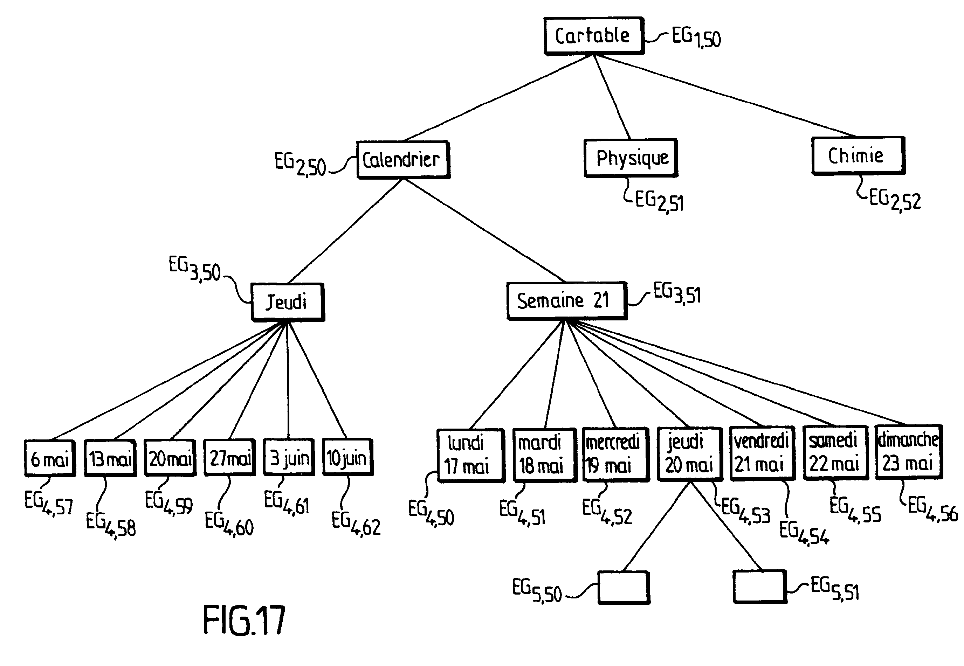

En se référant aux figures 2 et 14, on va maintenant décrire la structure et l'organisation des entités numériques de départ. Ces entités sont créées et organisées par un concepteur à l'aide d'un module logiciel éditeur comportant des fonctions d'éditions. Ces fonctions d'édition sont par exemple accessibles à l'aide d'un mot de passe afin d'en limiter l'accès.

La figure 2 montre un graphe latticiel 3, c'est-à-dire un graphe orienté sans circuit. A chaque noeud du graphe, représenté par un rectangle, correspond une entité numérique E. La figure 14 montre le contenu d'une entité numérique $E_1$. Toutes les entités numériques sont conçues de la même manière. En référence à la figure 14, une entité numérique comporte des données de contenu, à savoir un nom dans un champ nom 37 et une couverture dans un champ couverture 38. Une entité numérique comporte aussi des données fonctionnelles d'organisation, à savoir une liste de références dans un champ REF. Enfin, une entité numérique comporte des données fonctionnelles de représentation, à savoir un facteur de forme dans un champ 39 et des paramètres d'affichage par défaut dans des champs PA. A titre illustratif on décrit plus précisément la racine du graphe, c'est-à-dire l'entité d'ordre 1.

L'entité numérique $E_1$ contient des données de contenu, telles qu'un nom $N_1$ et une couverture $K_1$. La couverture $K_1$ peut contenir tout type de données, par exemple du texte, des images ou une interface graphique. Une entité contient des données de représentation. Dans l'exemple considéré, il s'agit d'un coefficient $\gamma$ définissant un rapport entre hauteur et largeur, car l'entité E est destinée à être représentée par une fenêtre rectangulaire. Le rapport $\gamma$ définit la forme de la fenêtre représentant l'entité E, cette forme étant considérée comme invariable.

Toutefois, de préférence, l'entité $E_1$ étant la racine du graphe, elle ne contient pas de données de représentation, c'est-à-dire que son champ 39 peut être vide.

L'entité $E_1$ contient des données d'organisation se rapportant aux entités qui lui sont subordonnées, à savoir une liste de références dans le champ REF désignant les entités qui lui sont immédiatement subordonnées dans le graphe 3, c'est-à-dire les entités d'ordre 2 $E_2$ et $E_3$. Les références sont symbolisées par des flèches 7 sur le graphe 3. Par exemple, dans le cas où l'ensemble d'entités numériques se rapporte à un livre de cours, les entités d'ordre 2 constituent des chapitres du livre et les entités d'ordre 3 des sous chapitres. Dans ce cas, la couverture de l'entité racine comporte le titre du livre, chaque entité d'ordre 2 comporte une couverture avec le titre du chapitre, chaque entité d'ordre 3 comporte une couverture avec le texte du sous chapitre correspondant, etc.

L'entité $E_1$ comporte, pour chaque entité qu'elle désigne, à savoir l'entité $E_2$ (respectivement $E_3$), des paramètres d'affichage par défaut dans les champ PA. Ces paramètres comprennent une taille par défaut $D_{E2,E1}$ (respectivement $D_{E3,E1}$) de l'entité $E_2$ (respectivement $E_3$) dans l'entité $E_1$ et des coordonnées par défaut $X_{E2,E1}$, $Y_{E2,E1}$ (respectivement $X_{E3,E1}$, $Y_{E3,E1}$) de l'entité $E_2$ (respectivement $E_3$) dans l'entité $E_1$. La taille par défaut $D_{E2,E1}$ est un nombre positif qui détermine la largeur de la fenêtre représentant l'entité $E_2$ en fonction de la largeur de la fenêtre représentant l'entité $E_1$. La fonction de ces paramètres sera décrite plus bas.

Les paramètres sont choisis de manière que, lorsque les entités $E_1$, $E_2$ et $E_3$ sont représentées sur l'écran 2, $E_2$ et $E_3$ puissent être représentées dans la représentation de E1 sans se chevaucher, tel que cela sera décrit en détail plus loin.

L'entité d'ordre 2 $E_2$, comporte un nom $N_2$, une couverture $K_2$. L'entité $E_2$ contient des données de représentation. Dans l'exemple considéré, il s'agit d'un coefficient $\gamma_2$ définissant un rapport entre hauteur et largeur. Le rapport $\gamma_2$ définit la forme de la fenêtre représentant l'entité $E_2$, cette forme étant considérée comme invariable lors de la navigation. Par exemple $\gamma_2$=2/3.

De même, l'entité $E_2$ comporte une liste de références désignant les entités qui lui sont immédiatement subordonnées, c'est-à-dire les entités d'ordre 3 $E_4$ et $E_5$. L'entité $E_2$ comporte, pour l'entité $E_4$ (respectivement $E_5$), des paramètres d'affichage par défaut. Ces paramètres comprennent une taille par défaut $D_{E4,E2}$ (respectivement $D_{E5,E2}$) de l'entité $E_4$ (respectivement $E_5$) dans l'entité $E_2$ et des coordonnées par défaut $X_{E4,E2}$, $Y_{E4,E2}$ (respectivement $X_{E5,E2}$, $Y_{E5,E2}$) de l'entité $E_4$ (respectivement $E_5$) dans l'entité $E_2$.

De même, l'entité d'ordre 2 $E_3$, comporte un nom $N_3$, une couverture $K_3$ et un rapport entre sa hauteur et sa largeur $\gamma_3$.

L'entité $E_3$ comporte une liste de références désignant les entités qui lui sont immédiatement subordonnées, c'est-à-dire les entités d'ordre 3 $E_5$ et $E_6$. L'entité $E_3$ comporte, pour l'entité $E_5$ (respectivement $E_6$), des paramètres d'affichage par défaut. Ces paramètres comprennent une taille par défaut $D_{E5,E3}$ (respectivement

$D_{E6,E3}$) de l'entité $E_5$ (respectivement $E_6$) dans l'entité $E_3$ et des coordonnées par défaut $X_{E5,E3}$, $Y_{E5,E3}$ (respectivement $X_{E6,E3}$, $Y_{E6,E3}$) de l'entité $E_5$ (respectivement $E_6$) dans l'entité $E_3$.

Dans l'exemple représenté, l'entité $E_5$ est référencée à la fois dans l'entité $E_2$ et dans l'entité $E_3$. Cette possibilité de référencer une même entité numérique plusieurs fois permet de représenter des données de contenu correspondantes dans plusieurs contextes différents. On notera que cela n'implique pas que la taille $D_{E5,E2}$ soit égale à la taille $D_{E5,E3}$, ni que les coordonnées $X_{E5,E2}$, $Y_{E5,E2}$ soit égales aux coordonnées $X_{E5,E3}$, $Y_{E5,E3}$. Au contraire, la représentation de l'entité numérique peut être adaptée en fonction du contexte dans lequel elle est visualisée.

De même, l'entité d'ordre 3 $E_4$, comporte un nom $N_4$, une couverture $K_4$ et un rapport entre sa hauteur et sa largeur $\gamma_4$. L'entité $E_4$ ne comportant pas d'entité subordonnée, sa liste de référence est vide. Les entités $E_5$ et $E_6$ sont conçues de manière similaire.

Pour faciliter l'utilisation d'une telle organisation, notamment la navigation dans l'interface graphique représentant les entités, une contrainte de non circularité est imposée dans l'exemple représenté, c'est-à-dire que, dans sa liste de référence, une entité ne peut ni se désigner elle-même, ni désigner une entité parente, c'est-à-dire une entité la désignant directement ou indirectement. Une première entité désigne directement une deuxième entité si la liste de références de la première entité désigne la deuxième entité. Une première entité désigne indirectement une deuxième entité si la liste de références de la première entité désigne la deuxième entité par l'intermédiaire d'au moins deux références. Par exemple, la liste de références de l'entité $E_6$ ne peut désigner ni l'entité $E_6$, ni l'entité $E_3$, ni l'entité $E_1$. On notera qu'il ne s'agit pas d'une contrainte impérative de programmation.

En outre, l'ordre des entités est déterminé par la construction du graphe 3 et non pas par une caractéristique intrinsèque des entités. Une entité $E_n$ peut être désignée dans une liste de référence d'une entité quelconque, à condition que l'entité $E_n$ ne soit pas une ascendante de l'entité la désignant. Par exemple, l'entité $E_6$ peut être référencée dans l'entité $E_4$, tel que cela a été représenté en trait interrompu sur la figure 2. En d'autres termes, une entité n'a pas nécessairement un numéro d'ordre unique dans le graphe 3.

La taille D et les coordonnées X et Y définies pour chaque entité E correspondent à une taille et à des cordonnées par défaut pour afficher un élément graphique représentant l'entité E dans un état déplié, tel que cela sera décrit en détail ci-dessous.

Les entités numériques contiennent toutes les données et paramètres permettant de créer l'interface graphique. Les entités n'ont pas à être modifiées pendant la navigation dans l'interface graphique. Les fonctions d'édition n'ont pas à être accessibles dans le mode de navigation.

Fonctions d'édition

En se référant à la figure 23, on va maintenant décrire les fonctionnalités du logiciel d'édition permettant au concepteur de définir et d'organiser les entités numériques de manière graphique.

La figure 23 montre une fenêtre $F_{10}$ représentant une entité $E_{10}$. La fenêtre $F_{10}$ comporte une zone de contenu 233 et une barre de titre 232. Lorsque le concepteur souhaite créer et référencer une entité $E_{11}$ dans l'entité $E_{10}$, il sélectionne dans la fenêtre $F_{10}$ représentant l'entité $E_{10}$ l'endroit où il souhaite représenter l'entité $E_{11}$, par exemple à l'aide du pointeur de la souris, et commande la création d'une fenêtre, par exemple à l'aide d'un clic, ce qui a pour effet de créer une entité $E_{11}$ en mémoire et de faire apparaître une fenêtre $F_{11}$ représentant l'entité $E_{11}$ dans la fenêtre $F_{10}$, puis il choisit la taille de la fenêtre $F_{11}$, par exemple en étirant la fenêtre $F_{11}$ à l'aide du curseur. Le champ REF de l'entité $E_{10}$ reçoit une référence vers l'entité $E_{11}$. Comme la fenêtre $F_{11}$ ne chevauche aucune fenêtre, la position est considérée comme admissible par le système et la taille $D_{E11,E10}$ et les coordonnées relatives $X_{E11,E10}$, $Y_{E11,E10}$ de la fenêtre $F_{11}$ sont mémorisées dans le champ PA de l'entité $E_{10}$. Le coefficient $\gamma_{11}$ est mémorisé dans le champ 38 de l'entité $E_{11}$. Le concepteur saisit le nom de l'entité $E_{11}$ qu'il vient de créer directement dans la barre de titre de la fenêtre $F_{11}$. Le logiciel offre aussi des fonctions d'attribution de contenu permettant de saisir un lien vers le fichier constituant le contenu cognitif devant être affiché dans la fenêtre $F_{11}$. Ce contenu est alors stocké ou référencé dans le champ couverture de l'entité $E_{11}$.

De la même manière, le concepteur référence dans l'entité $E_{10}$ une entité $E_{12}$ dont la taille $D_{E12,E10}$ et les coordonnées $X_{E12,E10}$, $Y_{E12,E10}$ sont déterminées à partir d'une fenêtre $F_{12}$ représentant l'entité $E_{12}$.

Lorsque le concepteur souhaite référencer dans l'entité $E_{10}$ une entité $E_{13}$ et qu'il choisit la taille et la position de la fenêtre $F_{13}$ la représentant tel que cela est représenté en trait interrompu sur la figure 23, la fenêtre $F_{13}$ chevauche la fenêtre $F_{12}$ et le système considère donc que la configuration n'est pas admissible. Dans ce cas, le système détermine automatiquement des positions admissibles pour la fenêtre $F_{13}$. Les positions admissibles sont par exemple les positions telles qu'un coin de la fenêtre $F_{13}$ se trouve contre un coin de la fenêtre $F_{12}$ et qu'un bord de la fenêtre $F_{13}$ se trouve contre un bord de la fenêtre $F_{12}$, la fenêtre $F_{13}$ ne chevauchant pas la fenêtre $F_{12}$. Par exemple, une position admissible consiste à placer le coin 230 contre le coin 250, le bord 240 étant placé contre le bord 260. Cette position est représentée en trait mixte sur la figure 23. Une deuxième position admissible consiste à placer le coin 231 contre le coin 251, le bord 241 étant placé contre le bord 261. Cette position est représentée en trait plein sur la figure 23. De manière similaire, chaque couple constitué par un coin et un bord de la fenêtre $F_{13}$ constitue une position admissible en combinaison avec un couple constitué par un coin et un bord de la fenêtre $F_{12}$. Il existe donc huit positions admissibles pour la fenêtre $F_{13}$. Le système sélectionne parmi ces huit positions celle qui entraîne le plus petit déplacement de la fenêtre $F_{13}$ par rapport à la position choisie par le concepteur. Dans notre exemple, il s'agit de la position représentée en trait plein sur la figure 23. La taille $D_{E13,E10}$ et les coordonnées relatives $X_{E13,E10}$, $Y_{E13,E10}$ de la fenêtre $F_{13}$ sont mémorisées dans le champ PA de l'entité $E_{10}$. Le coefficient $\gamma_{13}$ est mémorisé dans le champ 38 de l'entité $E_{13}$.

Lorsqu'une nouvelle fenêtre a été créée, l'ensemble des fenêtres contenues dans la fenêtre représentant l'entité parente est agrandi. Dans notre exemple, il s'agit des fenêtres $F_{11}$, $F_{12}$ et $F_{13}$, contenues dans la fenêtre $F_{10}$ représentant l'entité parente $E_{10}$. Les fenêtres $F_{11}$, $F_{12}$ et $F_{13}$ sont agrandies proportionnellement, en gardant leurs positions relatives les unes par rapport aux autres, jusqu'à la taille maximale affichable dans la fenêtre $F_{10}$, c'est-à-dire jusqu'à ce que soit la hauteur soit la largeur de la zone de contenu de la fenêtre $F_{10}$ soit entièrement utilisée. Le système considère que la largeur de la zone de contenu de la fenêtre $F_{10}$ est entièrement utilisée lorsqu'un bord d'une première fenêtre contenue dans la fenêtre $F_{10}$ est en contact avec le bord gauche de la zone de contenu de la fenêtre $F_{10}$ et qu'un bord de la première fenêtre ou d'une deuxième fenêtre contenue dans la fenêtre $F_{10}$ est en contact avec le bord droit de la zone de contenu de la fenêtre $F_{10}$. Le système considère que la hauteur de la zone de contenu de la fenêtre $F_{10}$ est entièrement utilisée lorsqu'un bord d'une première fenêtre contenue dans la fenêtre $F_{10}$ est en contact avec le bord inférieur de la zone de contenu de la fenêtre $F_{10}$ et qu'un bord de la première fenêtre ou d'une deuxième fenêtre contenue dans la fenêtre $F_{10}$ est en contact avec le bord supérieur de la zone de contenu de la fenêtre $F_{10}$. Dans l'exemple représenté sur la figure 23, la largeur de la fenêtre $F_{10}$ est entièrement utilisée. Lorsque les nouvelles tailles $D_{E11,E10}$, $D_{E12,E10}$ et $D_{E13,E10}$ et positions $X_{E11,E10}$, $Y_{E11,E10}$ $X_{E12,E10}$, $Y_{E12,E10}$ et $X_{E13,E10}$, $Y_{E13,E10}$ des fenêtres $F_{11}$, $F_{12}$ et $F_{13}$ ont été déterminées, elles sont mémorisées dans l'entité parente $E_{10}$.

De cette manière, le concepteur construit la configuration par défaut $C_d$, le système permettant de contrôler, et le cas échéant de corriger automatiquement les configurations qui ne répondent pas aux critères de non chevauchement et d'optimisation de l'espace d'affichage à l'intérieur de chaque fenêtre.

Lorsque la configuration par défaut $C_d$ a été déterminée, le système calcule pour chaque élément graphique la portion occupée par ses éléments graphiques enfants. Par exemple, si on considère la fenêtre $F_{10}$, la portion occupée s'exprime sous la forme d'un rectangle occupé $RO_{10}$ circonscrivant les fenêtres $F_{11}$, $F_{12}$ et $F_{13}$. Le rectangle occupé $RO_{10}$ a été représenté en pointillé sur la figure 23 par mesure de clarté, bien qu'il n'apparaisse aucunement dans l'interface graphique. Le rectangle occupé $RO_{10}$ est caractérisé par un rapport entre sa hauteur et sa largeur $\Gamma_{10}$. Le rapport $\Gamma_{10}$ est mémorisé dans un champ 234 de l'entité $E_{10}$. Le champ 234 contient également une variable booléenne $dl_{10}$. Par exemple la variable $dl_{10}$ prend la valeur 0 si la largeur du rectangle occupé $RO_{10}$ est égale à la largeur de la zone de contenu de la fenêtre $F_{10}$ et la variable $dl_{10}$ prend la valeur 1 si la hauteur du rectangle occupé est égale à la hauteur de la zone de contenu de la fenêtre $F_{10}$. Le champ 234 comporte également des coordonnées par défaut $X_{RO10}$ et $Y_{RO10}$ pour le rectangle occupé $RO_{10}$ exprimées dans le référentiel de la fenêtre $F_{10}$.

Lorsque le rectangle occupé $RO_{10}$ a été défini, les largeurs $D_{E11,E10}$, $D_{E12,E10}$ et $D_{E13,E10}$ et les coordonnées $X_{E11,E10}$, $Y_{E11,E10}$ $X_{E12,E10}$, $Y_{E12,E10}$ et $X_{E13,E10}$, $Y_{E13,E10}$ des fenêtres $F_{11}$, $F_{12}$ et $F_{13}$ sont avantageusement recalculées pour être exprimées dans le référentiel du rectangle occupé $RO_{10}$, en fonction des données contenues dans le champ 234, comme cela sera décrit en détail plus loin. On notera que les largeurs et les coordonnées des éléments graphiques enfants sont toujours exprimées par rapport à et dans le référentiel de l'élément graphique parent. Le rectangle occupé est un référentiel intermédiaire qui présente une utilité à chaque fois que les éléments graphiques enfants ont leurs coordonnées ou leurs tailles recalculées, par exemple lors d'un changement de forme d'un élément graphique. Le rectangle occupé est également utile pour les opérations de projection ou de zoom, comme on le verra plus bas.

Lorsque l'utilisateur a fini de concevoir l'interface graphique dans sa configuration par défaut, les données contenues dans les différents champs des entités numériques sont sauvegardées pour pouvoir être exploitées par un module logiciel navigateur qui va être décrit ci-dessous.

**Construction de l'interface graphique représentant la configuration par défaut**

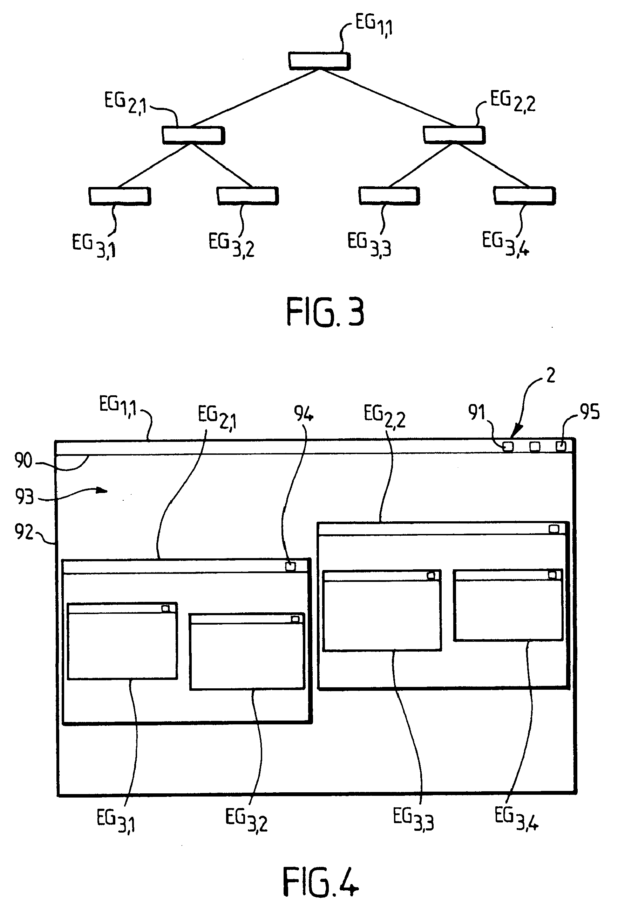

En se référant aux figures 3 à 5 et à la figure 15, on va maintenant décrire le procédé de construction de l'interface graphique permettant de visualiser le contenu des entités de la figure 2, dans une configuration par défaut $C_d$, sur l'écran 2 et la structure des éléments graphiques EG. Cette construction est réalisée par un module logiciel navigateur comportant des fonctions de navigation. Les modules logiciels navigateur et éditeur peuvent être réalisés sous la forme d'un programme ou de plusieurs programmes séparés. On considère dans cet exemple que dans la configuration par défaut $C_d$ tous les éléments graphiques sont dans un état déplié.

Lorsqu'un utilisateur ouvre une session du logiciel navigateur, le procédé d'affichage est initialisé et utilise les paramètres d'affichages et les listes de référence des entités mémorisées pour afficher un ensemble d'éléments graphiques sur l'écran 2, de manière que la structure de l'interface soit isomorphe à la structure des données rangées dans les entités numériques.

La structure générale des données définissant un élément graphique est maintenant décrite en référence à la figure 15. Un élément graphique EG comporte :

- un champ élément parent 30 pour stocker une référence désignant l'élément graphique parent dans la zone de contenu duquel l'élément graphique EG doit être affiché,
- un champ entité représentée 31 pour stocker une référence désignant l'entité numérique que l'élément EG représente,
- un champ portion occupée 235 pour stocker la largeur, la hauteur et les coordonnées du rectangle occupé, ainsi qu'un facteur de forme et un facteur de zoom,
- un champ largeur 33 pour stocker une largeur de l'élément graphique EG, qui est exprimée sous la forme d'une proportion de la largeur du rectangle occupé RO de l'élément graphique parent désigné dans le champ 30,
- un champ coordonnées 34 pour stocker des coordonnées de l'élément graphique EG définissant sa position dans et relativement au rectangle occupé de l'élément parent désigné dans le champ 30, et
- des champs éléments enfants 35 pour stocker des références désignant les éléments graphiques enfants devant être affichés dans la zone de contenu de l'élément EG.

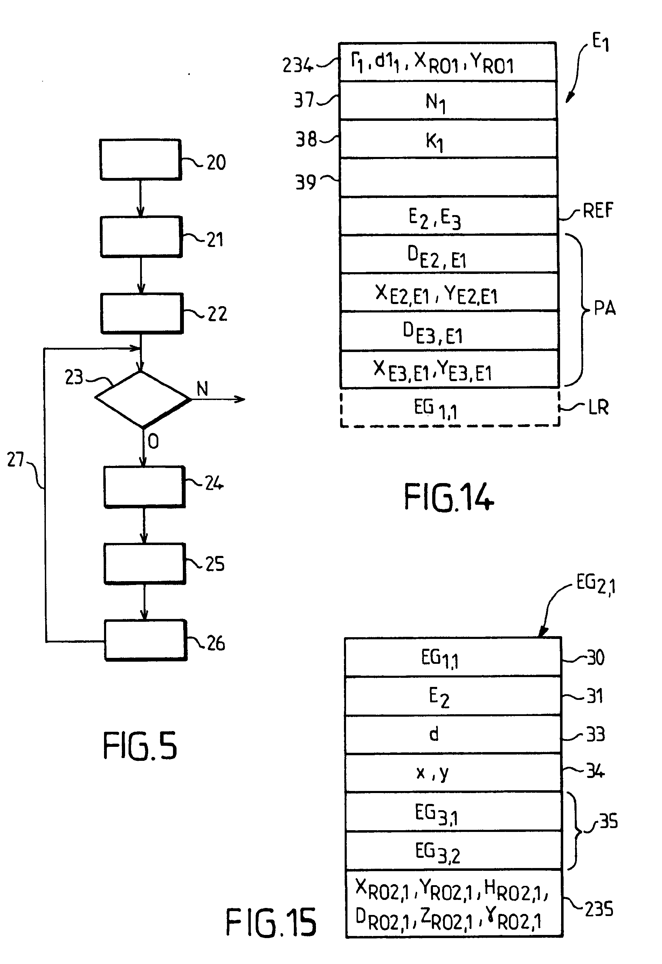

Un élément graphique est créé pour chaque entité de la figure 2. La figure 3 représente l'organisation logique des éléments graphiques de l'interface et la figure 4 représente l'apparence réelle de l'interface graphique obtenue, selon un exemple de réalisation illustratif. Par concision, le même symbole de référence est employé pour l'élément graphique tel qu'il apparaît à l'écran et pour les données définissant cet élément graphique. Pour construire les éléments graphiques, l'algorithme représenté sur la figure 5 est exécuté.

A l'étape 20, une entité numérique d'entrée prédéterminée, à savoir ici la racine $E_1$ du graphe 3, est sélectionnée.

A l'étape 21, un élément graphique d'ordre 1 $EG_{1,1}$ est créé pour représenter l'entité sélectionnée à l'étape 20 et une référence est créée de l'élément graphique $EG_{1,1}$ vers l'entité $E_1$ dans le champ 31. De plus, une référence vers l'élément graphique $EG_{1,1}$ est mémorisée dans un champ liste des représentations LR de l'entité $E_1$ pour construire une liste de tous les éléments graphiques représentant l'entité $E_1$, comme cela est représenté en trait interrompu sur la figure 14.

A l'étape 22, l'élément graphique créé à l'étape 21 $EG_{1,1}$ est configuré. Par exception, pour l'élément $EG_{1,1}$ représentant la racine de l'arborescence, le champ 30 est vide. L'élément graphique $EG_{1,1}$ reçoit pour largeur d stockée dans le champ 33 une largeur par défaut $D_{E1}^*$ prédéterminée et pour coordonnées x et y stockées dans le champ 34 des coordonnées par défaut $X_{E1}^*$, $Y_{E1}^*$

prédéterminées. Par exception, pour l'entité $E_1$, le champ 39 est vide. L'élément graphique $EG_{1,1}$ reçoit pour hauteur une hauteur par défaut $H_{E1}^*$ prédéterminée. L'élément $EG_{1,1}$, contrairement aux autres éléments graphiques, est géré par le système d'exploitation. L'utilisateur peut donc agir sur l'élément $EG_{1,1}$ de la même manière que sur toute application, par exemple pour le fermer définitivement. Les paramètres $D_{E1}^*$, $H_{E1}^*$, $X_{E1}^*$ et $Y_{E1}^*$ sont donc fixés par le système d'exploitation. Ils déterminent la taille et la position de l'interface graphique dans son ensemble sur l'écran 2. De préférence, celle-ci occupe tout l'écran. Une taille par défaut $D_{E1}^*$, correspondant par exemple à la taille de l'écran 2, et des coordonnées par défaut $X_{E1}^*$, $Y_{E1}^*$, correspondant par exemple au centre de l'écran 2, sont donc générés dans ce cas. Elle peut aussi occuper une partie de l'écran, notamment si le programme est exécuté sous un système d'exploitation du type multi fenêtres. On notera qu'une entité numérique comporte des paramètres statiques alors qu'un élément graphique comporte des paramètres dynamiques, c'est-à-dire que la largeur d et les coordonnées x et y sont des paramètres qui peuvent recevoir différentes valeurs au cours de la navigation. L'apparence générale d'un élément graphique est maintenant donnée en référence à la figure 4. Dans cet exemple, l'élément graphique est une fenêtre rectangulaire qui comporte, en référence à l'élément $EG_{1,1}$, une barre de titre 90 destinée à afficher le titre de l'élément graphique, par exemple le nom stocké dans le champ 37 de l'entité correspondante, et des boutons de commande 91 pour entrer des commandes de navigation, qui seront décrites ensuite. Un cadre 92 délimite une zone de contenu 93. La zone de contenu est destinée à afficher des données cognitives relatives à l'élément graphique $EG_{1,1}$ ainsi que les éléments graphiques enfants tel que cela sera décrit en détail plus loin. Le rectangle occupé $RO_{1,1}$ est calculé à partir des données stockées dans le champ 234 de l'entité $E_1$. Les coordonnées du rectangle occupé $x_{RO1,1}$ et $y_{RO1,1}$, exprimées en fonction de l'élément graphique $EG_{1,1}$ reçoivent respectivement les valeurs $X_{RO1}$ et $Y_{RO1}$ stockées dans l'entité $E_1$. Le facteur de zoom $z_{RO1,1}$ reçoit une valeur par défaut $z_{RO1,1}=1$. Le rapport de forme $\gamma_{RO1,1}$ reçoit pour valeur le rapport $\Gamma_1$. Les dimensions du rectangle occupé $RO_{1,1}$, c'est-à-dire sa largeur $D_{RO1,1}$ et sa hauteur $H_{RO1,1}$, sont déterminées par les équations ci-dessous :

$$D_{RO1,1} = D_{E1}^*.z_{RO1,1} \text{ si } dl_1=0$$

$$H_{RO1,1} = (H_{E1}^*-b).z_{RO1,1} \text{ si } dl_1=1,$$

où b désigne la hauteur prédéfinie de la barre de titre de l'élément graphique $EG_{1,1}$ ;
avec $H_{RO1,1}= \gamma_{RO1,1}.D_{RO1,1}$ dans tous les cas

Les dimensions $D_{RO1,1}$ et $H_{RO1,1}$ sont stockées dans le champ 235 de l'élément graphique $EG_{1,1}$.

A l'étape 23, une condition d'élément graphique non encore rempli est éprouvée. La condition est vérifiée s'il existe un élément graphique dont les éléments enfants n'ont pas encore été créés, c'est-à-dire un élément graphique qui n'a pas encore été sélectionné lors des précédents passages par l'étape 23. Pour effectuer ce test, le programme actualise une liste des éléments graphiques chaque fois qu'il en crée un. Dans le cas présent, la condition est vérifiée par l'élément $EG_{1,1}$.

A l'étape 24, un élément satisfaisant le condition de l'étape 23, à savoir ici l'élément EG1,1, est sélectionné. La liste de référence de l'entité désignée dans le champ 31, à savoir l'entité $E_1$ est lue dans le champ REF de cette entité. La liste de référence désigne deux entités $E_2$ et $E_3$.

A l'étape 25, un élément graphique est créé pour chacune des entités désignées dans la liste lue à l'étape 24. Deux éléments graphiques d'ordre 2 $EG_{2,1}$ et $EG_{2,2}$ sont donc créés et la liste des éléments graphiques est actualisée. Chaque élément graphique créé à l'étape 25 est référencé dans le champ 35 de l'élément graphique sélectionné à l'étape 24, à savoir dans l'élément graphique $EG_{1,1}$.

A l'étape 26, chacun des éléments graphiques créés à l'étape 25 est configuré. Il sera suffisant de décrire cette étape pour l'élément graphique $EG_{2,1}$ représentant l'entité $E_2$ puisque les autres éléments graphiques sont configurés selon les mêmes principes.

En référence à la figure 15, dans l'élément $EG_{2,1}$ nouvellement créé, le champ 30 reçoit une référence vers l'élément sélectionné à l'étape 24, à savoir $EG_{1,1}$, qui est l'élément parent. Le champ 31 reçoit une référence vers une des entités désignées dans la liste lue à l'étape 24, à savoir ici $E_2$. L'entité $E_2$ reçoit une référence vers l'élément en cours de configuration, ici $EG_{2,1}$, dans le champ LR.

Pour la représentation, l'élément graphique reçoit pour largeur d stockée dans le champ 33 le paramètre de taille par défaut de l'entité qu'il représente, à savoir ici $D_{E2,E1}$ qui est lu dans les champs PA de l'entité parente, ici $E_1$, laquelle est identifiée par le contenu du champ 30 de l'élément graphique combiné au contenu du champ 31 de l'élément graphique parent.

La taille par défaut $D_{E2,E1}$ détermine la largeur de l'élément graphique $EG_{2,1}$ sous la forme d'une proportion de la largeur du rectangle occupé RO de l'élément graphique parent, référencé dans le champ 30. Par exemple $D_{E2,E1}=0,45$ dans l'exemple représenté sur la figure 4. Pour calculer la taille d'affichage réelle d'un élément, le programme multiplie la largeur stockée dans le champ 33 de cet élément par la largeur de rectangle occupé $D_{RO}$ contenue dans le du champ 235 de la vue parente désignée dans le champ 30, et ainsi de suite jusqu'à remonter à l'élément graphique racine, ici $EG_{1,1}$, dont la largeur dans le champ 33 représente une largeur absolue dans l'écran 2. Pour le cas de l'élément $EG_{2,1}$,

cette largeur réelle sera donc $D_{E2,E1}.D_{RO1,1}.D_{E1}^*$.

La hauteur de l'élément graphique est calculée à partir de sa largeur stockée dans le champ 33 et du coefficient stocké dans le champ 39 de l'entité représentée, qui est désignée dans le champ 31.

Les coordonnées x, y stockées dans le champ 34 reçoivent pour valeur les coordonnées par défaut correspondantes de l'entité désignée dans le champ 31, lesquelles sont lues dans les champs PA de l'entité parente, à savoir pour l'élément $EG_{2,1}$, les coordonnées $X_{E2,E1}$, $Y_{E2,E1}$ stockées dans l'entité $E_1$.

Les coordonnées par défaut (ici $X_{E2,E1}$, $Y_{E2,E1}$) sont exprimées par un couple (abscisse, ordonnée) déterminant la position d'un coin ou du centre de l'élément graphique en cours de configuration (ici $EG_{2,1}$) par rapport à un coin ou au centre du rectangle occupé RO de l'élément graphique parent. Par exemple, ces coordonnées sont exprimées sous la forme d'une proportion de la largeur et de la hauteur du rectangle occupé RO de l'élément graphique parent. Dans l'exemple de la figure 4, si on prend le coin supérieur de la zone de contenu 93 comme origine du repère, les coordonnées par défaut de $EG_{2,1}$ sont par exemple : $X_{E2,E1}=0$ et $Y_{E2,E1}=1/5$.

Le rectangle occupé $RO_{2,1}$ est calculé, tel que cela a été décrit précédemment, à partir du contenu de l'entité $E_2$, champ 234.

Lorsque la configuration des éléments $EG_{2,1}$ et $EG_{2,2}$ est terminée, le programme revient à l'étape 23 comme indiqué par la flèche 27. Ainsi, les éléments graphiques créés au fur et à mesure de l'exécution de l'algorithme complètent l'arborescence de la figure 3 dans le sens de la descente vers les niveaux inférieurs et complètent donc l'interface graphique pour aboutir à une représentation de toutes les entités de la figure 2.

Par exemple, à l'itération suivante de l'étape 24, l'élément $EG_{2,1}$ est sélectionné. La liste de référence lue désigne deux entités $E_4$ et $E_5$. Deux éléments graphiques $EG_{3,1}$ et $EG_{3,2}$ sont donc créés, chacun comportant une référence vers une entité d'ordre 2 $E_4$,$E_5$ et une référence vers l'élément graphique parent $EG_{2,1}$.

On notera que les éléments graphiques $EG_{3,2}$ et $EG_{3,3}$ représentent la même entité $E_5$. Les éléments graphiques $EG_{2,1}$ et $EG_{2,2}$, qui contiennent directement les éléments graphiques $EG_{3,2}$ et $EG_{3,3}$, sont considérés comme deux contextes associés à l'entité $E_5$. Les éléments graphiques $EG_{3,2}$ et $EG_{3,3}$ comportent tous les deux une référence à l'entité $E_5$ dans le champ 31, et non pas, par exemple, à l'entité $E_5$ et à une copie $CE_5$ de l'entité $E_5$. Cela a pour conséquence que tout le contenu cognitif de l'entité $E_5$ peut être consulté à travers l'élément graphique $EG_{3,2}$ ou l'élément graphique $EG_{3,3}$. L'utilisateur n'a donc pas à se préoccuper de la localisation des entités puisque tous les éléments graphiques représentant l'entité se rapportent directement à l'entité et non à un alias ou raccourci.

La figure 4 montre l'interface graphique dans la configuration par défaut Cd affichant l'ensemble hiérarchisé d'éléments graphiques de l'arbre de la figure 4.

Chaque élément graphique d'ordre n est ainsi contenu dans au moins un élément graphique d'ordre n-1, n étant compris entre 2 et l'ordre maximal des éléments graphiques, c'est-à-dire quatre dans l'exemple. Les éléments graphiques d'ordre n enfants d'un même élément graphique d'ordre n-1 sont entièrement affichés dans la zone de contenu de l'élément d'ordre n-1 sans se chevaucher.

Comme indiqué, la taille et la position des éléments graphiques dans la configuration $C_d$ est entièrement définie par les paramètres contenus dans les champs PA des entités numériques. Ces paramètres sont fixés de manière à obtenir une représentation sans recouvrement mutuel des éléments graphiques frères (c'est-à-dire enfants d'un même élément graphique).

Dans l'interface graphique obtenue, le contenu de chaque entité numérique est accessible et la relation logique entre les entités numériques, telle qu'elle a été définie dans l'arborescence 3 est aussi immédiatement visible.

Il se peut toutefois que l'affichage de tous les éléments graphiques soit rendu impossible, ou du moins inutile, en raison de leur nombre trop important et de la taille nécessairement limitée de l'écran. Dans ce cas on peut prévoir une limite de taille d'affichage prédéterminée, de manière que le procédé de construction de l'interface graphique s'arrête automatiquement lorsque la taille calculée pour un élément graphique est inférieure à la limite de taille. Ceci évite de construire des éléments graphiques qui ne sont pas affichables, ou du moins pas lisibles. Par exemple, le test de taille peut être effectué à l'étape 24 pour l'élément graphique sélectionné. Dès lors que sa zone de contenu est plus petite que la limite fixée, il est inutile de la remplir et on passe directement à l'étape 23.

Un test similaire peut être employé pour construire l'interface graphique correspondant à un ensemble d'entités numériques présentant une caractéristique de circularité, qui supposerait en théorie une infinité d'éléments graphiques.

En variante, lors de la construction de l'interface graphique représentant la configuration par défaut, à l'étape 24, lorsque que la zone de contenu de l'élément graphique sélectionné est plus petite que la limite fixée, l'élément graphique est affiché dans un état fermé, qui sera décrit plus loin, et le processus de création des éléments graphiques est interrompu.

**Création d'une référence**

A tout moment le concepteur peut souhaiter ajouter une référence d'une entité numérique vers une autre entité numérique. Pour cela, en mode d'édition, un bouton de commande de création (non représenté) est prévu sur chaque élément graphique. Ce bouton est par exemple accessible à l'aide d'un clic droit sur la barre de titre de l'élément graphique. Lorsque le concepteur actionne le bouton de commande de création de l'élément graphique $EG_{3,1}$, par exemple à l'aide du curseur de la souris, une référence flottante désignant l'entité $E_4$ est créée. La référence est dite « flottante », car elle n'appartient à aucune liste de référence. Un élément graphique temporaire représentant l'entité $E_4$ apparaît alors sur l'écran en transparence et en superposition par rapport aux autres éléments graphiques de l'interface. Chaque élément graphique comporte également un bouton de commande de validation de référence. Lorsque le concepteur actionne le bouton de commande de validation de référence de l'élément graphique $EG_{3,4}$, après avoir créé une référence flottante désignant l'élément $EG_{3,1}$, une référence est créée dans la liste de référence de l'entité $E_6$, la référence désignant $E_4$. A ce moment, un élément graphique d'ordre 4 $EG_{4,1}$ (non représenté) est créé dans l'élément graphique $EG_{3,4}$, l'élément graphique $EG_{4,1}$ affichant l'entité $E_4$. Simultanément, l'élément graphique temporaire disparaît de l'écran. L'élément graphique $EG_{4,1}$ est configuré à partir des données de l'entité $E_4$. On notera que si l'entité $E_4$ comportait une liste de référence non vide, des éléments graphiques d'ordre 5 seraient créés dans l'élément graphique $EG_{4,1}$, tel que cela a été décrit en référence au procédé de construction de l'interface graphique.

On va maintenant décrire des fonctions de navigation permettant à l'utilisateur de changer l'apparence de l'interface graphique pour mieux voir les éléments graphiques de son choix.

Pour cela, l'utilisateur doit sélectionner l'élément graphique auquel il souhaite appliquer cette fonction. Il existe plusieurs manières de mettre en oeuvre une sélection d'élément graphique. Une méthode simple est d'utiliser le pointeur de la souris 5 et de considérer que l'élément graphique sélectionné est à tout instant celui sur la zone propre duquel se trouve le pointeur. La zone propre d'un élément graphique est constituée de l'élément graphique à l'exception des zones recouvertes par ses éléments graphiques enfants.

Pour que l'interface soit facile à utiliser, l'élément graphique sélectionné est singularisé par un marquage graphique (changement de couleur, changement de contraste, encadrement, etc.).

**Procédé de projection**

En se référant aux figures 4, 16 et 18, on va maintenant décrire les étapes d'une fonction de projection qui permet d'effectuer une projection d'un élément $EG_n$ dans un élément $EG_{n-1}$ le contenant. Pour l'illustration, on considère l'interface de la figure 4 dans laquelle la projection est appliquée à l'élément $EG_{2,1}$.

A l'étape 400, l'élément $EG_{2,1}$, qui doit être projeté dans l'élément $EG_{1,1}$, est sélectionné par l'utilisateur au moyen du pointeur.

A l'étape 401, une commande de projection est détectée par le programme. La commande de projection peut par exemple être émise lors de l'appui sur un bouton de commande 94 prévu dans chaque élément graphique, ici l'élément $EG_{2,1}$.

A l'étape 405, le rectangle occupé $RO_{2,1}$ de l'élément sélectionné $EG_{2,1}$ est agrandi jusqu'à la plus grande taille affichable dans la zone de contenu de l'élément graphique parent $EG_{1,1}$, à savoir jusqu'à ce qu'au moins une de ses dimensions, à savoir sa largeur $D_{RO2,1}$ ou sa hauteur $H_{RO2,1}$, soit égale à la dimension correspondante de la zone de contenu de l'élément parent $EG_{1,1}$. On notera que le facteur de forme $\gamma_{RO2,1}$ du rectangle occupé $RO_{2,1}$ n'est pas modifié par cet agrandissement. De même, le facteur de zoom $z_{RO2,1}$ n'est pas modifié par la projection. Les nouveaux paramètres de taille et de position du rectangle occupé $RO_{2,1}$ sont stockés dans le champ 235 de l'élément graphique $EG_{2,1}$. Lorsque le nouveau rectangle occupé $RO_{2,1}$ a été calculé, les éléments graphiques $EG_{3,1}$ et $EG_{3,2}$, contenus dans l'élément graphique $EG_{2,1}$, sont automatiquement repositionnés et redimensionnés sans calcul supplémentaire puisque leurs tailles et dimensions sont exprimées dans le référentiel du rectangle occupé $RO_{2,1}$.

L'état final de l'interface graphique avec l'élément graphique $EG_{2,1}$ projeté dans l'élément parent $EG_{1,1}$ est représenté sur la figure 16 à une échelle réduite. Le contenu de la zone de contenu de l'élément projeté a été incorporé dans l'élément parent et son cadre et sa barre de titre ne sont plus représentés. Le titre affiché dans la barre de titre 90 est modifié pour signaler qu'il s'agit d'une représentation projetée. Par exemple, ce titre devient « titre de l'entité $E_1 \rightarrow$ titre de l'entité $E_2$ ». En d'autres termes, la projection permet d'escamoter un niveau d'emboîtement des éléments graphiques.

Si le facteur de zoom du rectangle occupé de l'élément enfant est supérieur à 1, celui-ci n'étant pas modifié par la projection, tous les éléments graphiques contenus dans l'élément enfant ne sont pas affichés dans la zone de contenu de l'élément parent. Dans ce cas, la partie de la zone de contenu de l'élément enfant affichée dans l'élément parent après la projection correspond à la partie de la zone de contenu qui était affichée dans l'élément enfant avant la projection.

Dans le cas particulier d'un facteur de zoom égal à 1, lorsque les formes du rectangle occupé de l'élément graphique enfant et de la zone de contenu de l'élément graphique parent ne sont pas identiques, le rectangle occupé enfant occupe soit toute la hauteur soit toute la largeur de la zone de contenu parente. La hauteur, respectivement la largeur, finale du rectangle occupé de l'élément enfant n'est jamais supérieure à la hauteur, respectivement la largeur, de la zone de contenu de l'élément graphique parent, ce qui assure que tous les éléments graphiques contenus dans l'élément enfant sont complètement affichés dans la zone de contenu de l'élément parent.

La fonction de projection a un effet local limité au contenu de l'élément parent de l'élément sélectionné à l'étape 400. Les autres éléments graphiques contenus dans cet élément ne sont plus visibles à l'issue de la projection, à savoir l'élément $EG_{2,2}$ n'est plus visible sur la figure 16.

Tout le contenu de l'élément projeté, à savoir sa couverture si elle est affichée ou les éléments graphiques enfants, à savoir ici les éléments $EG_{3,1}$ et $EG_{3,2}$, sont modifiés d'un seul tenant avec le rectangle occupé de l'élément graphique projeté, c'est-à-dire comme s'il s'agissait d'un seul et même élément graphique. Cet effet est obtenu très simplement en modifiant uniquement les variables dans le champ 235 de l'élément graphique projeté. En effet, par construction, la taille et la position à l'écran des éléments graphiques enfants sont toujours calculées en fonction de ces variables.

Un élément graphique peut ainsi être projeté dans l'élément graphique le contenant, ceci afin d'escamoter autant de niveaux intermédiaires qu'il est souhaitable. L'élément graphique englobant héberge alors tout le contenu d'un de ses éléments graphiques englobés.

Lorsque l'élément graphique enfant qui doit être projeté contient des éléments graphiques repliés, une zone est réservée dans la zone de contenu de l'élément graphique parent pour recevoir les éléments graphiques repliés de l'éléments graphique enfant. Dans ce cas, la projection des éléments graphiques dépliés de l'élément graphique enfant s'effectue comme cela a été décrit précédemment dans la portion de la zone de contenu de l'élément graphique parent non réservée aux éléments repliés.

En se référant à la figure 19, on va maintenant décrire les étapes de projection inverse d'une fonction qui permet d'effectuer une projection inverse d'un élément $EG_n$ dans un élément $EG_{n-1}$ le contenant. Pour l'illustration, cette fonction est appliquée à l'élément $EG_{2,1}$.

A l'étape 500, l'élément $EG_{2,1}$, qui a été projeté et qui doit retrouver son état par défaut dans l'élément $EG_{1,1}$, est sélectionné par l'utilisateur.

A l'étape 501, une commande de projection inverse est détectée par le programme. La commande de projection inverse peut par exemple être émise lors de l'appui sur un bouton de commande 95 prévu dans l'élément graphique $EG_{2,1}$.

A l'étape 504, les variables de position contenues dans le champ 34 de l'élément $EG_{2,1}$ sont réévaluées à leur valeur par défaut. Les autres éléments d'ordre n contenus dans l'élément $EG_{1,1}$ sont également repositionnés à leur position par défaut.

A l'étape 505, la largeur du rectangle occupé de l'élément $EG_{2,1}$ est réévaluée à sa valeur par défaut.

Depuis l'état représenté sur la figure 16, l'interface graphique revient dans l'état représenté par la figure 4.

De préférence, la fonction de projection inverse aboutit à l'état de l'élément parent qui existait avant l'exécution de la projection. Par exemple, si une fonction de repliement de l'élément $EG_{2,2}$ avait été exécutée avant la projection de l'élément $EG_{2,1}$, la fonction de projection inverse aboutirait à un état de l'élément parent $EG_{1,1}$ dans lequel l'élément $EG_{2,2}$ est à l'état replié. Pour cela, le programme tient à jour des variables d'état indiquant l'état déplié ou replié de chaque élément graphique.

Dans le cas où le programme détecte que l'élément $EG_{2,2}$ doit être affiché dans l'état replié, la fonction de projection inverse se poursuit, après l'étape 505, par une opération de repliement conformément à l'algorithme décrit ci-après.

La fonction de projection inverse produit aussi un effet local limité à l'élément parent de l'élément sélectionné.

## Procédé de repliement d'un élément graphique

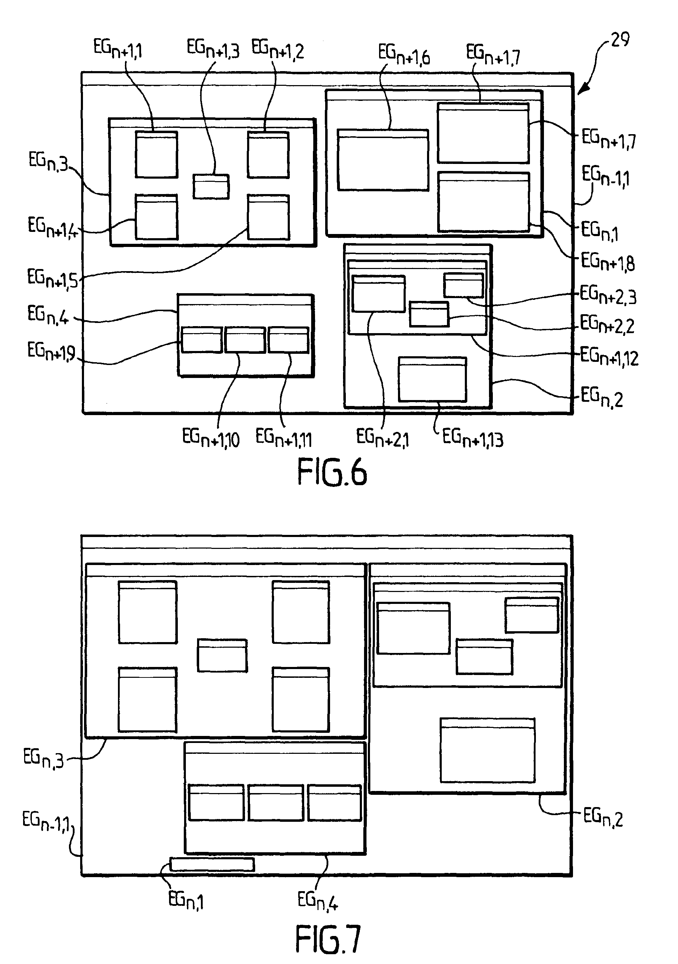

En se référant à la figure 6, on voit une interface graphique 29 constituée d'éléments graphiques EG issu du procédé de construction avec une autre arborescence. L'interface graphique 29 est construite de manière identique à la description précédente, mais à partir d'un ensemble d'entités numériques dont le graphe latticiel (non représenté) est différent du graphe latticiel de la figure 2. L'interface 29 comporte quatre niveaux hiérarchiques. Un élément d'ordre n-1 l'élément $EG_{n-1,1}$ comporte quatre élément d'ordre n $EG_{n,1}$, $EG_{n,2}$, $EG_{n,3}$ et $EG_{n,4}$.

L'élément $EG_{n,1}$ comporte trois éléments d'ordre n+1 $EG_{n+1,6}$, $EG_{n+1,7}$ et $EG_{n+1,8}$. L'élément $EG_{n,2}$ comporte deux éléments d'ordre n+1 $EG_{n+1,12}$ et $EG_{n+1,13}$. L'élément $EG_{n,4}$ comporte trois éléments d'ordre n+1 $EG_{n+1,9}$, $EG_{n+1,10}$ et $EG_{n+1,11}$. L'élément $EG_{n,3}$ comporte cinq éléments d'ordre n+1 $EG_{n+1,1}$, $EG_{n+1,2}$, $EG_{n+1,3}$, $EG_{n+1,4}$ et $EG_{n+1,5}$.

L'élément $EG_{n+1,12}$ comporte trois éléments d'ordre n+2 $EG_{n+2,1}$, $EG_{n+2,2}$ et $EG_{n+2,3}$.

L'élément graphique représentant la racine a été dénommé $EG_{n-1,1}$, par soucis de généralité. Il est sans importance, pour le fonctionnement des fonctions, de savoir dans quel niveau de l'arborescence la fonction est exécutée car ces fonctions sont exécutables à tous les niveaux.

En se référant aux figures 6, 7, 8, 9a à 9h et 10, on va maintenant décrire les étapes de l'exécution d'une fonction de repliement. Pour l'illustration, cette fonction est appliquée à l'élément $EG_{n,1}$. Cette fonction permet d'agrandir les éléments graphiques de la figure 6 lorsque l'élément graphique $EG_{n,1}$ est replié, de manière à obtenir un agrandissement maximal sans chevauchement des éléments graphiques $EG_{n,2}$, $EG_{n,3}$ et $EG_{n,4}$ et de leur contenu.

A l'étape 99, l'utilisateur commande le repliement de l'élément $EG_{n,1}$, par exemple en cliquant sur un bouton 95 prévu sur chaque élément graphique. L'élément $EG_{n,1}$ contenu dans l'élément $EG_{n-1,1}$ est réduit, du fait de l'action de l'utilisateur, de manière que l'élément $EG_{n,1}$ apparaisse dans un état réduit prédéterminé. L'état réduit peut par exemple correspondre à l'affichage du titre de l'élément $EG_{n,1}$, tel que cela est représenté sur la figure 7. A ce moment, un ensemble à redimensionner constitué de tous les autres éléments d'ordre n contenus dans le même élément d'ordre n-1 que l'élément à replier, c'est-à-dire les éléments $EG_{n,2}$, $EG_{n,3}$ et

$EG_{n,4}$, contenus dans l'élément $EG_{n-1,1}$ est automatiquement définit. L'algorithme est initialisé.

A l'étape 98, un compteur k est initialisé à 0. Ce compteur représente le nombre de passages dans la boucle refermée par la flèche 72 (dite boucle 72 par convention). Ce compteur k indique le rang des configurations qui sont en cours de construction. Une configuration de rang k $C_{k,i}$ est définie par un k-uplet de positions associées respectivement à k éléments graphiques d'ordre n de l'ensemble à redimensionner. Une configuration de rang k ne définit que des positions relatives entre les éléments graphiques. Une configuration de rang k est construite dans un plan virtuel et n'acquiert aucune position réelle et aucune dimension réelle dans l'interface graphique avant la fin de l'exécution de la fonction de repliement, comme cela sera décrit plus bas. Pendant la construction des configurations possibles, les dimensions des éléments graphiques de l'ensemble à redimensionner sont considérées être leurs dimensions par défaut dans l'élément graphique parent, telles qu'elles ressortent à la fois des paramètres PA contenus dans les entités numériques correspondantes et des dimensions figurant dans le champ 33 de l'élément graphique parent.

On va maintenant décrire les étapes 100 à 112, pour la construction des configurations possibles des éléments graphiques de l'ensemble à redimensionner.

A l'étape 113, une condition d'élément restant à positionner est éprouvée. Cette condition est vérifiée s'il reste au moins un élément de l'ensemble à redimensionner à positionner, c'est-à-dire au moins un élément de l'ensemble à redimensionner qui n'a pas encore été sélectionné à l'étape 100.

A l'étape 100, le compteur k est incrémenté et un élément de l'ensemble à redimensionner non encore sélectionné est sélectionné. Ici, l'élément $EG_{n,2}$ est sélectionné comme premier élément à positionner.

A l'étape 101, une condition d'existence de configuration de rang inférieur est éprouvée. Cette condition est vérifiée s'il existe au moins une configuration de rang k-1 en mémoire. Comme il n'existe pas de configuration de rang k-1=0, cette condition n'est pas vérifiée.

Lorsque la condition d'existence de configuration de rang inférieur n'est pas vérifiée, le programme passe à l'étape 102. A l'étape 102, une position prédéterminée est associée à l'élément graphique sélectionné à l'étape 100, à savoir ici l'élément $EG_{n,2}$. Cette position définit l'origine d'un repère dans le plan servant à définir les positions relatives des éléments graphiques dans la configuration en cours de construction. On appelle $EG_{n,2}C_{1,1}$ l'élément $EG_{n,2}$ positionné à la position prédéterminée. Dans la suite, la référence $EG_{n,2}C_{1,1}$ pourra désigner aussi la position particulière associée à l'élément $EG_{n,2}$. La position $EG_{n,2}C_{1,1}$ constitue une configuration de rang 1 $C_{1,1}$.

Lorsque l'étape 102 a été effectuée, le programme revient à l'étape 113 (flèche 96). Comme il reste maintenant deux éléments à positionner $EG_{n,3}$ et $EG_{n,4}$, la condition d'élément restant à positionner est vérifiée et le programme passe à l'étape 100 pour un deuxième passage dans la boucle 72.

A l'étape 100, le compteur k est incrémenté et un autre élément de l'ensemble à redimensionner, à savoir l'élément $EG_{n,3}$, est sélectionné comme deuxième élément à positionner.

A l'étape 101, la condition d'existence de configuration de rang inférieur est éprouvée. Comme il existe une configuration de rang 1 $C_{1,1}$, cette condition est vérifiée.

Lorsque la condition d'existence de configuration est vérifiée, le programme passe à l'étape 103. A l'étape 103, une configuration de rang k-1, à savoir la configuration $C_{1,1}$, est sélectionnée. Par construction, les configurations de rang k-1 préexistantes sont seulement constituées des éléments graphiques ayant été sélectionnés à l'étape 100 lors des précédents passages dans la boucle 72, donc elles ne contiennent pas le nouvel élément graphique sélectionné.

A l'étape 104, un élément positionné dans la configuration de rang k-1 sélectionnée à l'étape 103, à savoir ici l'élément positionné $EG_{n,2}C_{1,1}$, est sélectionné.

A l'étape 105, le programme sélectionne un couple constitué d'un bord de l'élément sélectionné à l'étape 104 et d'un sommet situé à une extrémité de ce bord, à savoir le couple constitué par le sommet 63 et le bord 68 de l'élément positionné $E_{n,2}C_{1,1}$.

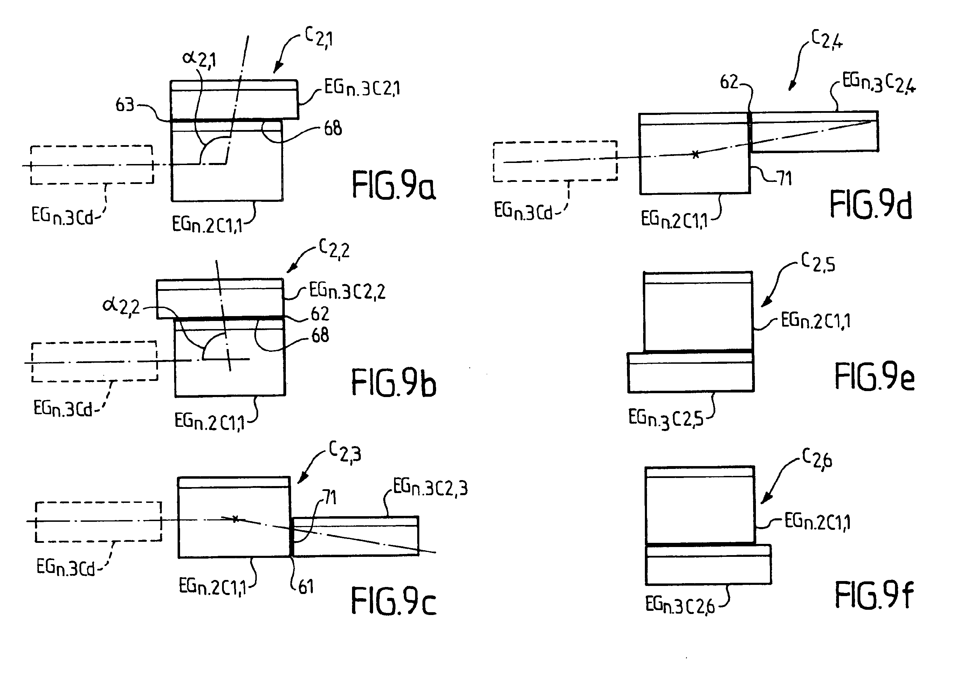

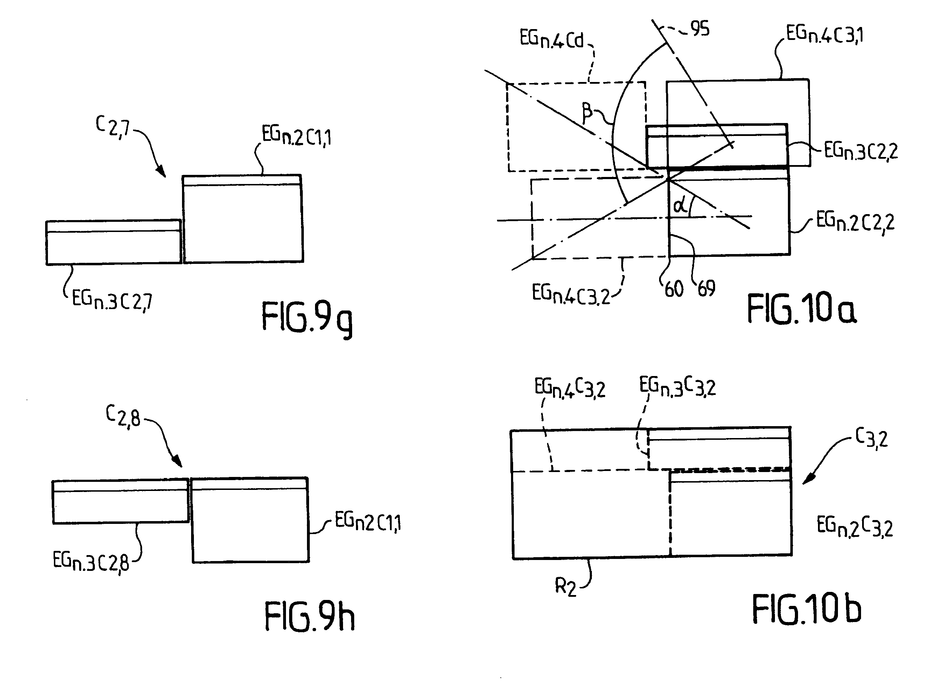

A l'étape 106, une position $EG_{n,3}C_{2,1}$ de l'élément sélectionné à l'étape 100 $EG_{n,3}$ est déterminée, de manière qu'un des sommets de l'élément $EG_{n,3}$ soit placé contre le sommet 63 sélectionné à l'étape 105, qu'un bord de l'élément $EG_{n,3}$ soit en contact avec le bord 68 sélectionné à l'étape 105 et que l'élément $EG_{n,3}$ ne chevauche pas l'élément sélectionné à l'étape 104. L'élément positionné $EG_{n,3}C_{2,1}$ est représenté sur la figure 9a. L'ensemble constitué par la configuration $C_{1,1}$ et la position $EG_{n,3}C_{2,1}$ constitue une configuration de rang 2 $C_{2,1}$.

A l'étape 107 une condition de non-chevauchement est éprouvée. La condition de non-chevauchement est vérifiée si l'élément nouvellement positionné à l'étape 106, à savoir l'élément $EG_{n,3}C_{2,1}$, ne chevauche aucun des éléments positionnés dans la configuration sélectionnée à l'étape 103, à savoir la configuration $C_{1,1}$. Comme le seul élément positionné dans la configuration $C_{1,1}$ est l'élément $EG_{n,2}C_{1,1}$, et que cet élément n'est pas chevauché par l'élément $EG_{n,3}C_{2,1}$, la condition est vérifiée et on passe à l'étape 108.

A l'étape 108 une condition d'angle est éprouvée. La condition d'angle est vérifiée si l'angle $\alpha_{2,1}$ qui a pour sommet le centre de l'élément sélectionné à l'étape 104, à savoir l'élément $EG_{n,2}C_{2,1}$, dont la première branche est orientée vers le centre de l'élément $EG_{n,3}C_{2,1}$ et dont la deuxième branche est orientée dans la direction définie par la disposition relative de l'élément graphique positionné à l'étape 106 et de l'élément graphique sélectionné à l'étape 104 dans leur configuration par défaut $C_d$ est inférieur à un seuil prédéterminé S. Pour l'illustration, cette direction a été représentée par la droite allant du centre de l'élément $EG_{n,2}C_{1,1}$ vers le centre de l'élément $EG_{n,3}C_d$. L'élément $EG_{n,3}$ dans sa position par défaut a été représenté en pointillé sur la figure 9a. Par exemple, le seuil S est égal à 90°. Dans le cas représenté sur la figure 9a, la condition d'angle n'est pas vérifiée. La condition d'angle a pour but d'exclure les configurations dans lesquelles la disposition relative des éléments graphiques les uns par rapport aux autres à l'issue de l'opération de repliement est trop éloignée de leur disposition relative dans la configuration $C_d$, afin de faciliter pour l'utilisateur le repérage des différents éléments graphiques sur l'écran.

Comme la condition d'angle n'est pas vérifiée, on passe à l'étape 109A, qui consiste à effacer la configuration $C_{2,1}$.

A l'étape 110, une condition d'existence de couple bord-sommet est éprouvée. Cette condition est vérifiée lorsqu'au moins un couple constitué par un sommet et un bord, ayant le sommet pour extrémité, de l'élément sélectionné à l'étape 104, c'est-à-dire l'élément $EG_{n,2}C_{1,1}$, n'a pas été utilisé pour construire une configuration d'ordre 2. Comme la condition est vérifiée, on retourne à l'étape 105 pour effectuer un nouveau passage dans la boucle refermée par la flèche 73, dite boucle 73 par convention.

Lors du deuxième passage dans la boucle 73, à l'étape 105, un nouveau couple constitué par le sommet 62 et le bord 68 de l'élément $EG_{n,2}C_{1,1}$ est sélectionné.

A l'étape 106, une position $EG_{n,3}C_{2,2}$ de l'élément $EG_{n,3}$ est déterminée comme décrit précédemment, à savoir, de manière qu'un sommet de l'élément $EG_{n,3}$ soit placé contre le sommet 62, qu'un bord de l'élément $EG_{n,3}$ soit en contact avec le bord 68 et que l'élément $EG_{n,3}$ ne chevauche pas l'élément $EG_{n,2}C_{1,1}$. La position $EG_{n,3}C_{2,2}$ est représentée sur la figure 5b. L'ensemble constitué par la configuration $C_{1,1}$ et la position $EG_{n,3}C_{2,2}$ constitue une configuration de rang 2 $C_{2,2}$.

A l'étape 107 la condition de non-chevauchement est éprouvée. L'élément $EG_{n,3}C_{2,2}$ ne chevauchant aucun élément d'ordre n positionnés dans la configuration $C_{1,1}$, la condition de non-chevauchement est vérifiée et on passe à l'étape 108.

A l'étape 108 la condition d'angle est éprouvée. L'élément $EG_{n,3}C_d$ a été représenté en pointillé sur la figure 9b. L'angle $\alpha_{2,2}$ étant inférieur au seuil S, c'est-à-dire à 90°, la condition est vérifiée et on passe à l'étape 109B.

A l'étape 109B, la configuration $C_{2,2}$ est mémorisée.

A l'étape 110, la condition d'existence de couple est vérifiée puisque des couples constitués par un sommet et un bord de l'élément $EG_{n,2}C_{1,1}$ n'ont pas été sélectionnés. A ce moment, on retourne à l'étape 105 pour effectuer de nouveaux passages dans la boucle 73, qui se déroulent tous comme décrit précédemment.

Lors du troisième passage dans la boucle 73, à l'étape 105, un nouveau couple constitué par le sommet 61 et le bord 71 de l'élément $EG_{n,2}C_{1,1}$ est sélectionné.

A l'étape 106, une position $EG_{n,3}C_{2,3}$ de l'élément $EG_{n,3}$ est déterminée, de manière qu'un de ses sommets soit placé contre le sommet 61, qu'un bord de l'élément $EG_{n,3}$ soit en contact avec le bord 71 et que l'élément $EG_{n,3}$ ne chevauche pas l'élément $EG_{n,2}C_{1,1}$. L'élément positionné $EG_{n,3}C_{2,3}$ est représentée sur la figure 5c. L'ensemble constitué par la configuration $C_{1,1}$ et la position $EG_{n,3}C_{2,3}$ constitue une configuration $C_{2,3}$.

A l'étape 107 la condition de non-chevauchement est éprouvée. L'élément $EG_{n,3}C_{2,3}$ ne chevauchant aucun autre élément positionné dans la configuration $C_{1,1}$, la condition de non-chevauchement est vérifiée.

A l'étape 108 la condition d'angle est éprouvée. L'élément $EG_{n,3}$ dans sa position par défaut a été représenté en pointillé sur la figure 5c. L'angle $\alpha$ étant supérieur au seuil S, la condition d'angle n'est pas vérifiée et on passe à l'étape 109A.

A l'étape 109A, la configuration $C_{2,3}$ est effacée.

A l'étape 110, la condition d'existence de couple est vérifiée puisque des couples sommet-bord n'ont pas été utilisés. Comme cette condition est vérifiée on retourne à l'étape 105 pour effectuer un quatrième passage dans la boucle 73.

Lors du quatrième passage dans la boucle 73, à l'étape 105, un nouveau couple constitué par le sommet 62 et le bord 71 de l'élément $EG_{n,2}C_{1,1}$ est sélectionné.

A l'étape 106, une position $EG_{n,3}C_{2,4}$ de l'élément $EG_{n,3}$ est déterminée, de manière qu'un de ses sommets soit placé contre le sommet 62, qu'un bord de l'élément $EG_{n,3}$ soit en contact avec le bord 71 et que l'élément $EG_{n,3}$ ne chevauche pas l'élément $EG_{n,2}C_{1,1}$. La position $EG_{n,3}C_{2,3}$ est représentée sur la figure 5d. L'ensemble constitué par la configuration $C_{1,1}$ et la position $EG_{n,3}C_{2,4}$ constitue une configuration $C_{2,4}$.

La condition d'angle éprouvée à l'étape 108 n'étant pas vérifiée, la configuration $C_{2,4}$ est effacée à l'étape 109A et on passe à l'étape 110.

Pour un élément graphique rectangulaire, il existe huit couples distincts constitués par un sommet et un bord ayant le sommet pour extrémité. Donc quatre autres passages dans la boucle 73 sont effectués de manière similaire. Les configurations $C_{2,5}$, $C_{2,6}$, $C_{2,7}$, $C_{2,8}$ obtenues chacune à un passage dans la boucle 73 sont représentées sur les figures 5e à 5h.

Lors du huitième passage dans la boucle 73, à l'étape 110, la condition d'existence de couple n'est pas vérifiée puisque tous les couples sommet-bord ont été sélectionnés. Cette condition n'étant pas vérifiée le programme passe à l'étape 111.

A l'étape 111, une condition d'existence d'élément positionné est éprouvée. La condition est vérifiée lorsque dans la configuration sélectionnée à l'étape 103, à savoir ici dans la configuration $C_{1,1}$, il reste au moins un élément positionné qui n'a pas encore été sélectionné à l'étape 104. Comme la configuration $C_{1,1}$ ne contient que l'élément $EG_{n,2}C_{1,1}$ et que cet élément a déjà été sélectionné, la condition n'est pas vérifiée et le programme revient à l'étape 101. Si cette condition est vérifiée, le programme revient à l'étape 104, comme indiqué par la flèche 130.

A l'étape 112, une condition de configuration de rang inférieur restante est éprouvée. La condition est vérifiée lorsqu'il reste au moins une configuration de rang k-1 qui n'a pas encore été sélectionnée à l'étape 103. Si cette condition est vérifiée, le programme revient à l'étape 103, comme indiqué par la flèche 131. Comme la configuration $C_{1,1}$ est la seule configuration, la condition de configuration de rang inférieur restante n'est pas vérifiée et on passe à l'étape 112A.

A l'étape 112A, une condition d'existence de configuration restante est éprouvée. Cette condition est vérifiée lorsqu'au moins une configuration de rang k a été mémorisée à l'étape 109B, k étant égal au nombre de passage dans la boucle 72, c'est-à-dire qu'ici k=2. Lorsque cette condition n'est pas vérifiée, le seuil S est incrémenté à l'étape 97 et le programme retourne à l'étape 98. Cette étape 112A permet de détecter que le seuil S choisi est trop faible. On notera qu'un moyen pour déterminer une configuration dont la disposition relative des éléments graphiques les uns par rapport aux autres est modifiée le moins possible par rapport à leur disposition relative dans la configuration $C_d$ consiste à choisir initialement un seuil S très faible, puis, tant qu'aucune configuration ne convient, à incrémenter S et à répéter les étapes de construction des configurations depuis le départ.

Lorsque la condition de l'étape 112A est vérifiée, ce qui est le cas ici puisque des configurations de rang 2 ont été mémorisées, on passe à l'étape 113. A l'étape 113, une condition d'élément restant à positionner est éprouvée, la condition étant vérifiée lorsqu'il reste des éléments de l'ensemble à redimensionner qui doivent être positionnés. Comme les éléments $EG_{n,2}$ et $EG_{n,3}$ on été positionnés, il reste l'élément $EG_{n,4}$ à positionner, donc le programme passe à l'étape 100 pour effectuer un troisième passage dans la boucle 72.

Lors du troisième passage dans la boucle 72, à l'étape 100, l'élément $EG_{n,4}$ est sélectionné comme troisième élément à positionner.

A l'étape 101, la condition d'existence de configuration est éprouvée. Comme les configurations de rang 2 $C_{2,2}$, $C_{2,5}$, $C_{2,7}$ et $C_{2,8}$ ont été mémorisées, la condition d'existence de configuration de rang inférieur est vérifiée.

A l'étape 103, par exemple, la configuration $C_{2,2}$ est sélectionnée. On notera que seules les configurations de rang 2 qui ont été mémorisées à l'étape 109B peuvent être sélectionnées.

A l'étape 104, par exemple, l'élément $EG_{n,2}C_{2,2}$ est sélectionné.

A l'étape 105, un couple constitué par le sommet 63 et le bord 68 de l'élément $EG_{n,2}C_{2,2}$ est sélectionné.

A l'étape 106, une position $EG_{n,4}C_{3,1}$ de l'élément $EG_{n,4}$ est déterminée de manière qu'un de ses sommets soit placé contre le sommet 63, qu'un bord de l'élément $EG_{n,4}$ soit en contact avec le bord 68 et que l'élément $EG_{n,4}$ ne chevauche pas l'élément $EG_{n,2}C_{2,2}$. Cette position est représentée en trait plein sur la figure 10a. L'ensemble constitué par la configuration $C_{2,2}$ et la position $EG_{n,4}C_{3,1}$ constitue une configuration $C_{3,1}$.

A l'étape 107 la condition de non-chevauchement est éprouvée. L'élément $EG_{n,4}$ positionné dans la configuration $C_{3,1}$ chevauchant l'élément $EG_{n,3}C_{3,1}$, la condition n'est pas vérifiée et le programme passe à l'étape 109A.

A l'étape 109A, la configuration $C_{3,1}$ est effacée de la mémoire et le programme passe à l'étape 110.

A l'étape 110, une condition d'existence de couple est éprouvée. Comme la condition d'existence de couple est vérifiée, le programme retourne à l'étape 105 pour effectuer un nouveau passage dans la boucle 73.

Lors du deuxième passage dans la boucle 73, à l'étape 105, un nouveau couple constitué, par exemple, par le sommet 60 et le bord 69 de l'élément $EG_{n,2}C_{2,2}$ est sélectionné.

A l'étape 106, une position $EG_{n,4}C_{3,2}$ de l'élément $EG_{n,4}$ est déterminée de manière qu'un de ses sommets soit placé contre le sommet 60, qu'un bord de l'élément $EG_{n,4}$ soit en contact avec le bord 69 et que l'élément $EG_{n,4}$ ne chevauche pas l'élément $EG_{n,2}C_{2,2}$. Cette position est représentée en trait interrompu long sur la figure 10a. L'ensemble constitué par la configuration $C_{2,2}$ et la position $EG_{n,4}C_{3,2}$ constitue une configuration $C_{3,2}$.

A l'étape 107 la condition de non-chevauchement est éprouvée. L'élément $EG_{n,4}$ ne chevauchant pas l'élément $EG_{n,3}C_{3,3}$, la condition de non-chevauchement est vérifiée et le programme passe à l'étape 108.

A l'étape 108, la condition d'angle est éprouvée. Un élément $EG_{n,4}C_d$ a été représenté en trait interrompu court sur la figure 10a pour matérialiser l'angle $\alpha$ sur lequel porte le premier test. La condition d'angle est éprouvée successivement en choisissant chacun des éléments positionnés dans la configuration $C_{2,2}$ sélectionnée à l'étape 103 en tant que sommet de l'angle. Comme précédemment, l'angle est à chaque fois mesuré entre la première branche qui est orientée vers le centre de l'élément $EG_{n,4}C_{3,3}$ et la deuxième branche qui est orientée parallèlement à la droite joignant l'élément constituant le sommet de l'angle à l'élément positionné à l'étape 106 dans la position relative de ces deux éléments correspondant à la configuration $C_d$ telle que spécifiée par les paramètres PA des entités numériques. Ici, la condition d'angle est éprouvée ensuite pour l'angle $\beta$ qui a pour sommet le centre de l'élément $EG_{n,3}C_{2,2}$. La branche 95 matérialise la direction définie par $EG_{n,3}$ et $EG_{n,4}$ sur la figure 6. Les angles $\alpha$ et $\beta$ étant tous les deux inférieurs au seuil S, c'est-à-dire à 90° dans l'exemple, la condition est vérifiée et on passe à l'étape 109B.

A l'étape 109B, la configuration $C_{3,2}$ est mémorisée.

A l'étape 110, la condition d'existence de couple est vérifiée puisque des couples sommet-bord de l'élément $EG_{n,2}C_{2,2}$ n'ont pas été utilisés. A ce moment, le programme retourne à l'étape 105 pour effectuer un troisième passage dans la boucle 73.

Six autres passages dans la boucle 73 sont ainsi effectués de manière similaire. Lors du huitième passage dans la boucle 73, à l'étape 110, la condition d'existence de couple n'est pas vérifiée car tous les couples sommet-bord ont été utilisés. A ce moment, le programme passe à l'étape 111. La condition de l'étape 111 étant vérifiée, le programme retourne à l'étape 104.

A l'étape 104, un autre élément de la configuration sélectionnée à l'étape 103, à savoir l'élément $EG_{n,3}C_{2,2}$, est sélectionné.

Lorsque l'étape 104 a été effectuée, on passe à l'étape 105 pour un premier passage dans la boucle 73. Lors du huitième passage dans la boucle 73, à l'étape 110, la condition n'est pas vérifiée et on passe à l'étape 111. A l'étape 111, comme il ne reste plus d'élément à sélectionner dans la configuration $C_{2,2}$, on passe à l'étape 112. La condition étant vérifiée, on retourne à l'étape 103.

A l'étape 103, une autre configuration, par exemple la configuration $C_{2,5}$, est sélectionnée. Le programme se poursuit identiquement.

Lorsque toutes les configurations de rang inférieur ont été sélectionnées une fois à l'étape 103, la condition de l'étape 112 n'est plus vérifiée. A l'étape 112A, la condition d'existence de configuration restante étant vérifiée, le programme revient à l'étape 113. A ce moment, à l'étape 113, la condition d'existence d'élément à positionner n'est plus vérifiée puisque tous les éléments appartenant à l'ensemble à redimensionner ont été positionnés.

Les étapes décrites ci-dessus permettent de construire virtuellement des configurations des éléments constituant l'ensemble à redimensionner remplissant des critères géométriques déterminés. On notera que les étapes 105 et 106 sont une possibilité parmi d'autres permettant de placer les éléments graphiques dans des positions mutuellement adjacentes. Une fois les configurations admissibles construites, le programme sélectionne celle qui peut être affichée à la plus grande taille dans l'élément graphique d'ordre n-1 considéré, ici $EG_{n-1,1}$.

Pour cela, on va maintenant décrire les étapes 114 à 119 lors d'un passage dans une boucle refermée par la flèche 74, dite par convention boucle 74. Le nombre de passages dans la boucle 74 est égal au nombre de configurations qui ont été mémorisées à l'étape 109B. Le nombre de passages dans la boucle 74 est indexé par un indice m dans la description qui suit. Pour l'illustration, on se réfère ci-dessous à deux passages successifs de rang m, m+1.

A l'étape 114, une des configurations mémorisée, par exemple la configuration $C_{3,m}$, est sélectionnée.

A l'étape 115, un rectangle $R_m$ circonscrivant les éléments positionnés dans la configuration sélectionnée, à savoir $EG_{n,2}C_{3,m}$, $EG_{n,3}C_{3,m}$ et $EG_{n,4}C_{3,m}$, est déterminé. Sur la figure 10b, à titre d'exemple, le rectangle $R_2$ a été représenté, les éléments graphiques $EG_{n,2}C_{3,2}$, $EG_{n,3}C_{3,2}$ et $EG_{n,4}C_{3,2}$ étant représentés en trait interrompu et le rectangle $R_2$ en trait plein.

A l'étape 116, un rapport de largeur $\rho_{Lm}$ entre la largeur de la zone de contenu de l'élément $EG_{n-1,1}$ et la largeur du rectangle $R_m$ est calculé. A l'étape 117, un rapport de hauteur $\rho_{Hm}$ entre la hauteur de la zone de contenu de l'élément $EG_{n-1,1}$ et la hauteur du rectangle $R_m$ est calculé. En fait, la zone de contenu de l'élément $EG_{n-1,1}$ qui est réellement prise en compte peut être tronquée d'une portion que l'on réserve à l'affichage des éléments graphiques repliés le cas échéant. Cette portion réservée est une bande au bas de la zone de contenu de l'élément $EG_{n-1,1}$ dans laquelle est affiché l'élément $EG_{n,1}$ dans l'exemple de la figure 7. Ainsi, un chevauchement entre éléments repliés et éléments dépliés est évité.

A l'étape 118, un rapport minimum $\rho_{min,m}$ est déterminé entre le rapport de largeur $\rho_{Lm}$ et le rapport de hauteur $\rho_{Hm}$. Le couple $(C_{3,m}, \rho_{min,m})$ est mémorisé.

A l'étape 119, une condition est éprouvée, la condition étant vérifiée s'il reste des configurations $C_3$ à sélectionner. Lorsque cette condition est vérifiée le programme retourne à l'étape 114 pour un nouveau passage dans la boucle 74.

A l'étape 114, une configuration $C_{3,m+1}$ est sélectionnée.

A l'étape 115, un rectangle $R_{m+1}$ circonscrivant les éléments $EG_{n,2}C_{3,m+1}$, $EG_{n,3}C_{3,m+1}$ et $EG_{n,4}C_{3,m+1}$ est déterminé.

A l'étape 116, un rapport de largeur $\rho_{Lm+1}$ entre la largeur de l'élément $EG_{n-1,1}$ et la largeur du rectangle $R_{m+1}$ est calculé.

A l'étape 117, un rapport de hauteur $\rho_{Hm+1}$ entre la hauteur de l'élément $EG_{n-1,1}$ et la hauteur du rectangle est calculé.

A l'étape 118, un rapport minimum $\rho_{min,m+1}$ est déterminé entre le rapport de largeur $\rho_{Lm+1}$ et le rapport de hauteur $\rho_{Hm+1}$. Le couple $(C_{3,m+1}, \rho_{min,m+1})$ est mémorisé.

A l'étape 119, lorsque la condition n'est plus vérifiée le programme passe à l'étape 120.

A l'étape 120, le maximum $\Omega$ parmi les rapports minimum $\rho_{min,m}$, $\rho_{min,m+1}$ déterminés à l'étape 118 est déterminé. Par exemple, on considère que $\Omega = \rho_{min,m}$.

A l'étape 121, la configuration dont le rapport maximum $\rho_{min}$ est le plus grand, à savoir la configuration $C_{3,m}$, est sélectionnée.

A l'étape 122, la configuration sélectionnée $C_{3,m}$ est agrandie d'un coefficient $\rho_{min,m}$, de manière que la largeur ou la hauteur du rectangle $R_m$ soit égale respectivement à la largeur ou la hauteur de la zone de contenu (éventuellement tronquée) de l'élément $EG_{n-1,1}$. En d'autres termes, les variables de dimension figurant dans le champ 33 des éléments graphiques de l'ensemble à redimensionner sont recalculées et les variables de positions figurant dans le champ 34 sont recalculées de manière à centrer la configuration à afficher dans la zone de contenu de l'élément graphique parent. Les éléments de l'ensemble à redimensionner ainsi que les éléments d'ordre supérieur qu'ils contiennent sont agrandis en proportion puisque la dimension d'un élément graphique est toujours exprimée, dans le champ 33, comme une proportion de la dimension correspondante de la zone de contenu de l'élément parent référencé dans le champ 30. L'interface graphique dans l'état final à l'issue du repliement est représentée sur la figure 7. Le facteur de forme $\gamma_{ROn-1,1}$, les dimensions $D_{ROn-1,1}$, $H_{ROn-1,1}$ et les coordonnées $X_{ROn-1,1}$, $Y_{ROn-1,1}$ du rectangle occupé $RO_{n-1,1}$ sont recalculés à partir de la configuration $C_{3,m}$ agrandie, c'est-à-dire que le nouveau rectangle circonscrivant les éléments de l'ensemble redimensionné à l'étape 122 est déterminé. Ces valeurs sont stockées dans le champ 235 de l'élément graphique $EG_{n-1,1}$ et peuvent être exploitées pour effectuer une projection consécutive, par exemple une projection de l'élément graphique $EG_{n-1,1}$ dans un élément parent non représenté.

On notera que ces nouvelles valeurs peuvent également être exploitées, en mode édition, pour effectuer un changement de taille et de forme de l'élément graphique.

La fonction de repliement permet de toujours optimiser la proportion de l'interface graphique qui est réellement utilisée pour afficher des éléments graphiques. Ainsi, lorsqu'un utilisateur n'utilise plus un élément graphique et qu'il le réduit, les éléments graphiques restants affichés sont automatiquement redimensionnés et repositionnés de manière à occuper le plus d'espace possible sur l'interface graphique. En variante, il est possible de construire encore plus de configurations en sélectionnant les éléments graphiques dans tous les ordres successifs possibles.

On notera que l'utilisation conjointe de la projection et du repliement dans deux éléments graphiques adjacents autorise le rapprochement par juxtaposition visuelle du contenu cognitif de n'importe quel couple d'entités numériques, quelles que soient leur positions relatives dans la structure latticielle.

En variante, lorsque la nouvelle configuration a été sélectionnée et agrandie, une option d'animation peut être prévue. L'option d'animation permet de mettre en valeur le déplacement d'un élément graphique en affichant plusieurs positions intermédiaires, de manière similaire à un film d'animation. Cette option permet à l'utilisateur de repérer facilement le déplacement des éléments, ce qui lui évite d'avoir à les « chercher » sur l'écran. La vitesse de déplacement des éléments graphiques lors de l'animation est réglable par l'utilisateur.

Plutôt que d'aboutir à une juxtaposition rigoureuse des éléments graphiques redimensionnés, la fonction de repliement peut aussi être conçue pour préserver de légers espaces entre ceux-ci si cela améliore la lisibilité de l'interface.

**Procédé de dépliement d'un élément graphique**

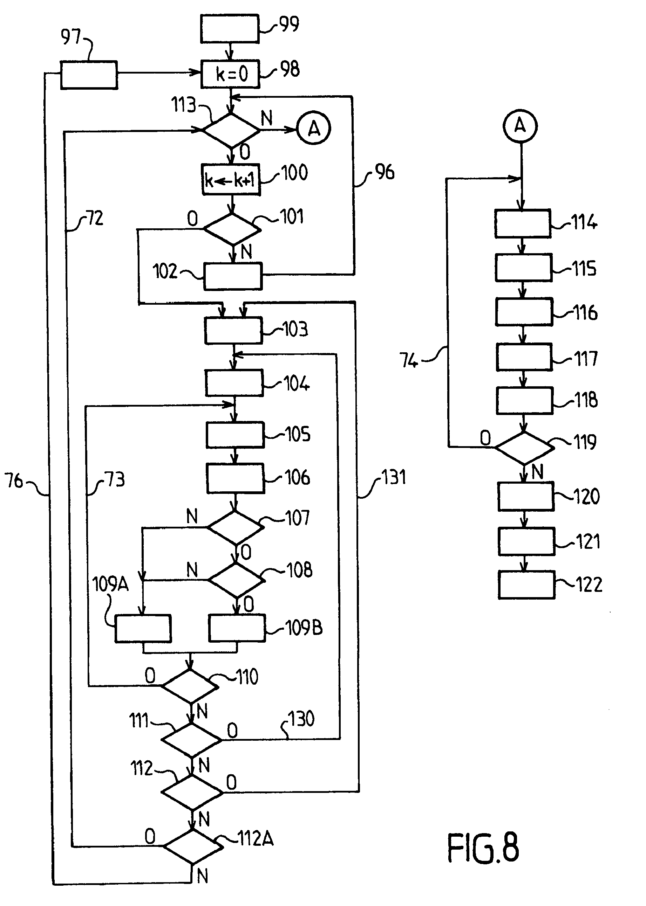

En partant de l'état représenté sur la figure 7, l'élément $EG_{n,1}$, qui est dans un état réduit, peut être sélectionné par l'utilisateur à l'aide du pointeur et l'utilisateur peut entrer une commande de dépliement, par exemple en cliquant un bouton de commande de dépliement représenté sur l'élément graphique $EG_{n,1}$ dans l'état réduit, afin qu'il retrouve son état déplié. A ce moment, un ensemble à redimensionner regroupant tous les éléments d'ordre n contenus dans l'élément parent $EG_{n-1,1}$ se trouvant déjà dans un état déplié, c'est-à-dire ici les éléments $EG_{n,2}$, $EG_{n,3}$ et $EG_{n,4}$, et l'élément sélectionné $EG_{n,1}$ est automatiquement défini. Ensuite, à partir de l'étape 98, l'algorithme décrit en référence à la figure 8 est initialisé et exécuté de manière identique au cas du repliement d'un élément graphique.

Procédé de zoom

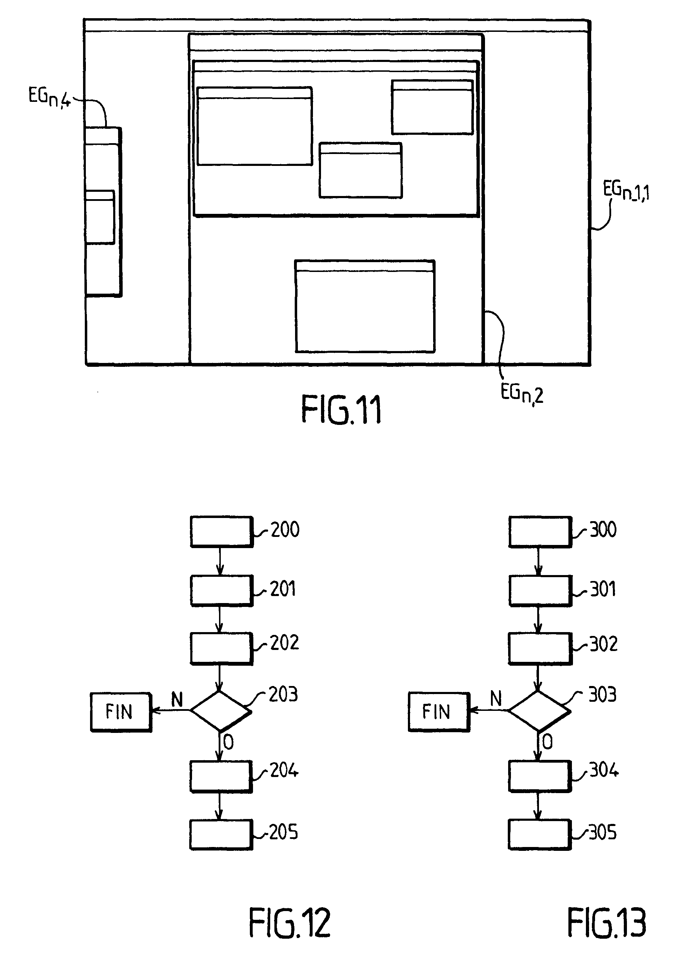

En se référant aux figures 11 et 12, on va maintenant décrire les étapes de l'exécution d'une fonction de zoom qui permet d'effectuer un zoom sur un élément graphique. Cette fonction utilise un coefficient de grossissement z qui peut être fixé par l'utilisateur. Par exemple, un coefficient z=1,1 permet un agrandissement en quelques paliers, qui est un bon compromis entre un agrandissement trop lent, c'est-à-dire demandant un grand nombre de commandes, et un agrandissement trop rapide, pour lequel l'utilisateur ne dispose pas d'un choix suffisant de tailles pour l'élément qu'il souhaite agrandir

Pour l'illustration, on part de l'interface graphique dans l'état représenté sur la figure 6.

A l'étape 200, l'élément qui doit être agrandi, par exemple l'élément $EG_{n,2}$, est sélectionné par l'utilisateur. De même que cela a été décrit précédemment, on peut considérer que l'élément graphique sélectionné est à tout instant celui sur la zone propre duquel se trouve le pointeur.

A l'étape 201, une commande de zoom est détectée par le programme. La commande de zoom peut par exemple être émise lors d'une rotation dans le sens horaire de la molette de la souris.

A l'étape 202, le programme calcule le nombre $\nu$ de zooms élémentaires pouvant être accomplis avec un coefficient de grossissement z prédéterminé avant que l'élément $EG_{n,2}$ n'atteigne sa taille maximale tout en restant complètement affiché dans l'élément $EG_{n-1,1}$. Pour cela, le programme simule les zooms successifs en les comptant.

A l'étape 203, une condition de taille maximale est éprouvée. La condition est vérifiée si $\nu \geq 1$. Si la condition de taille maximale n'est pas vérifiée, aucun grossissement n'est effectué et le procédé de zoom est arrêté. Si la condition est vérifiée, le programme passe à l'étape 204. A l'étape 204, le centre de l'élément $EG_{n,2}$ est approché du centre de l'élément parent $EG_{n-1,1}$ d'une dis-

tance $\Delta$ égale à la distance qui sépare leurs centres divisée par le nombre $\nu$ déterminé à l'étape 202 . Les autres éléments d'ordre n contenus dans l'élément $EG_{n-1,1}$ sont décalés de la même distance $\Delta$, dans le même sens.

A l'étape 205, le facteur de zoom $z_{ROn-1,1}$ du rectangle occupé $RO_{n-1,1}$ de l'élément $EG_{n-1,1}$ est multiplié par z. Les dimensions du rectangle occupé $RO_{n-1,1}$ stockées dans le champ 33 sont multipliées par z, ce qui a pour effet une multiplication par z des dimensions de tous les éléments d'ordre n contenus dans l'élément $EG_{n-1,1}$. La position du rectangle occupé $RO_{n-1,1}$ est recalculée et sa nouvelle position est stockée dans le champ 235 de l'élément graphique $EG_{n-1,1}$.

En d'autres termes tout le contenu de la zone de contenu de l'élément $EG_{n-1,1}$ est modifié, comme s'il s'agissait d'un unique élément graphique. En outre, la taille de tous les éléments apparents de l'élément graphique est modifiée simultanément, y compris la taille de la barre de titre et des différents outils (boutons, menus, etc.). En variante, pour éviter d'occuper une grande partie de l'écran par des parties standard des éléments graphiques, une hauteur limite de la barre de titre peut être prédéterminée. Dans ce cas, lorsque l'élément graphique est agrandi et que sa barre de titre atteint la hauteur limite, seule sa zone de contenu est agrandie, la barre de titre gardant une taille fixe.

On notera que lors d'une exécution ultérieure de la fonction de zoom, la fonction est effectuée de manière similaire en partant de l'état courant au moment où l'utilisateur entre une commande de zoom. Par exemple, si l'élément graphique sélectionné n'est plus l'élément $EG_{n,2}$, mais l'élément $EG_{n,3}$, le nombre $\nu$ et la distance $\Delta$ sont calculés à partir de l'élément graphique $EG_{n,3}$. Ainsi, un zoom élémentaire est effectué à chaque fois que l'utilisateur entre une commande de zoom.

Les éléments graphiques peuvent comporter un bouton de commande de zoom automatique. Lorsque le bouton de commande est actionné, le procédé de zoom s'effectue plusieurs fois séquentiellement comme cela a été décrit précédemment jusqu'à atteindre le grossissement maximal autorisé. Pour cela, le bouton de commande déclenche une séquence de commandes de zoom qui sont émises lors de tops d'horloge successifs et successivement détectées par le programme à l'étape 201 de manière à provoquer à chaque fois un incrément de zoom/recentrage.

Le procédé de zoom est inversible. En se référant à la figure 13, on va maintenant décrire les étapes qui permettent d'effectuer un zoom arrière sur un élément $EG_n$, par exemple pour revenir depuis l'état de la figure 11 à l'état de la figure 6.

A l'étape 300, l'élément $EG_{n,2}$, qui doit être rétréci, est sélectionné par l'utilisateur. Par exemple on utilise le principe de sélection mentionné plus haut. L'élément $EG_{n,2}$ est sélectionné dès que le pointeur se trouve dans celui-ci, à l'exclusion de la zone couverte par les éléments graphiques contenus dans celui-ci.

A l'étape 301, une commande de zoom arrière est détectée par le programme. La commande de zoom arrière peut par exemple être émise lors d'une rotation dans le sens anti-horaire de la molette de la souris.

A l'étape 302, le nombre $\varphi$ de zooms élémentaires arrière pouvant être accompli avant que l'élément $EG_{n,2}$ n'atteigne sa taille par défaut dans l'élément $EG_{n-1,1}$ est calculé, à partir d'un coefficient multiplicateur 1/z prédéterminé. Pour cela, le programme simule en les comptant les zooms successifs de coefficient 1/z jusqu'à ce que l'élément $EG_{n,2}$ atteigne sa taille par défaut.

A l'étape 303, une condition de taille minimale est éprouvée. La condition est vérifiée si $\varphi \geq 1$. Si la condition est vérifiée le programme passe à l'étape 304.

A l'étape 304, le centre de l'élément $EG_{n,2}$ est approché de son centre par défaut d'une distance $\Gamma$ égale à la distance qui les sépare divisée par $\varphi$. La position du rectangle occupé de l'élément graphique $EG_{n-1,1}$ est recalculée.

A l'étape 305, le facteur de zoom est multiplié par 1/z. Les dimensions du rectangle occupé de l'élément $EG_{n-1,1}$ sont multipliées par 1/z.

Tous les éléments d'ordre n contenus dans l'élément $EG_{n-1,1}$ sont décalés de la même distance, dans le même sens et redimensionnés du même coefficient. Le rectangle occupé est recalculé. Si la condition de l'étape 303 n'est pas vérifiée, la fonction est terminée sans modification de taille ni de position des éléments.

**Changement de contexte**

En se référant aux figures 17, 20 et 21, on va maintenant décrire une fonction de changement de contexte. Une telle fonction est accessible lorsqu'une entité numérique est désignée par plusieurs entités distinctes, qui correspondent à autant de contextes dans lesquels cette entité numérique peut être consultée. La figure 17 représente une arborescence obtenue avec un troisième ensemble d'entités. Dans cet exemple de réalisation, l'ensemble d'entités se rapporte à un cartable électronique. Il est inutile de représenter l'arborescence des entités numériques qui, par construction, est isomorphe à l'arborescence des éléments graphiques. Le cartable contient un élément graphique $EG_{2,50}$ qui représente un calendrier. Chaque élément graphique d'ordre 4 $EG_4$ contenu dans l'élément $EG_{2,50}$ représente une page du calendrier, c'est-à-dire un jour de l'année. Les jours sont triés d'une part par jour de la semaine, c'est-à-dire, par exemple, qu'un élément graphique d'ordre 3 $EG_{3,50}$ regroupe les jeudis, et d'autre part par semaine, par exemple un élément graphique $EG_{3,51}$ contient les jours de la 21$^{ème}$ semaine de l'année. On notera que l'élément graphique $EG_{2,50}$ contient d'autres éléments d'ordre 3 $EG_3$ qui contiennent respectivement des éléments d'ordre 4 regroupés par semaine ou par jour de la semaine. Ces autres éléments n'ont pas été représentés afin de simplifier la figure 17. De même, les éléments d'ordre 4 peuvent contenir des éléments d'ordre 5. Deux éléments $EG_{5,50}$ et $EG_{5,51}$ peuvent par exemple contenir respectivement une tâche à effectuer et un rendez-vous pour le jeudi 20 mai. Les fonctionnalités classiques d'un agenda peuvent être remplies avec une telle représentation.

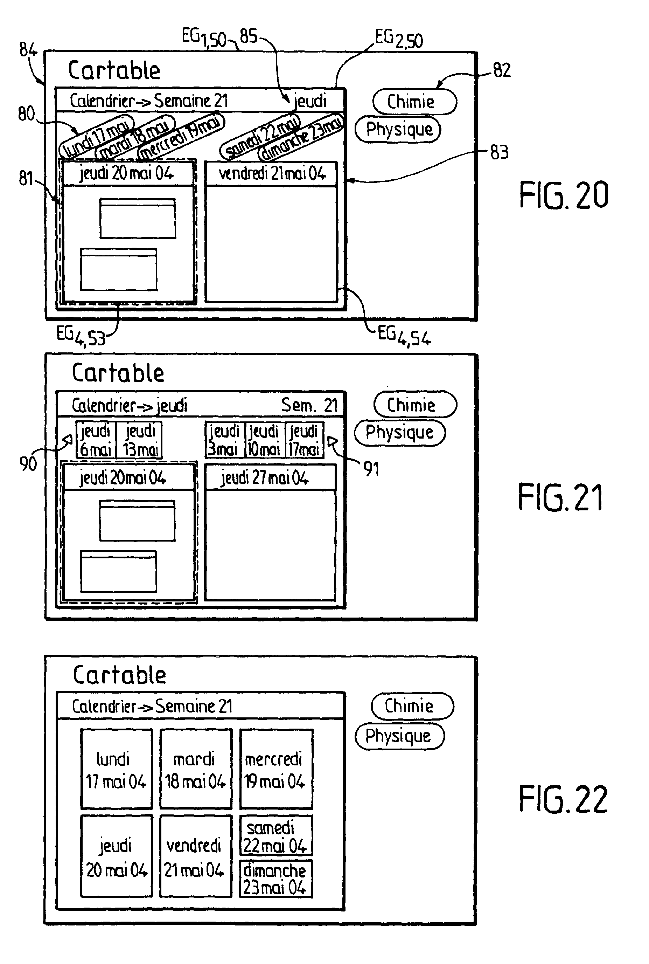

En se référant à la figure 20, on voit l'interface graphique constituée des éléments graphiques de la figure 17 dans un état initial particulier. Dans cet exemple, les éléments graphiques dans l'état replié ont la forme d'une icône allongée affichant le titre de l'élément graphique et dans l'état déplié la forme d'une fenêtre rectangulaire avec une barre de titre et de commande 84 et une zone de contenu rectangulaire délimitée par un cadre. La barre 84 comprend un champ titre pour afficher le titre de l'élément et des boutons de commande. Ici, l'élément graphique $EG_{3,51}$ est représenté en projection dans l'élément $EG_{2,50}$. Dans cet exemple, une portion 80 de la zone de contenu de l'élément graphique $EG_{3,51}$ est réservée pour les éléments repliés $EG_{4,50}$, $EG_{4,51}$, $EG_{4,52}$, $EG_{4,55}$ et $EG_{4,56}$. La portion 80 réservée aux éléments repliés peut être escamotable et s'adapter automatiquement en fonction du nombre d'éléments qu'elle contient, ou, en variante, disposer d'une taille et d'une position fixes prédéterminées. En outre, la portion 80, de manière similaire à la barre de titre, peut disposer d'une taille maximale. Dans ce cas, lors d'un zoom, si la portion 80 a atteint sa limite de taille, elle n'est pas agrandie en proportion du rectangle occupé RO mais elle garde une taille fixe. Les éléments dépliés $EG_{4,53}$ et $EG_{4,54}$ se partagent une portion 81 de la zone de contenu qui est réservée aux éléments dépliés. De la même manière, deux portions 82 et 83 sont définies dans la zone de contenu de l'élément graphique $EG_{1,50}$ pour les éléments repliés $EG_{2,51}$ et $EG_{2,52}$ et dépliés $EG_{2,50}$ respectivement.

L'entité $E_{40}$, ayant pour titre « jeudi 20 mai 04 », est représentée par l'élément $EG_{4,53}$ et également par l'élément $EG_{4,59}$. L'élément $EG_{3,50}$ est considéré comme un contexte de l'entité $E_{40}$, contexte qui sera appelé « semaine 21 » et l'élément $EG_{3,51}$ comme un autre contexte de l'entité $E_{40}$, contexte qui sera appelé « jeudi ». La figure 20 correspond à l'affichage de l'entité $E_{40}$ dans le contexte « jeudi ». Comme l'élément $EG_{3,51}$ a été projeté dans l'élément $EG_{2,50}$, l'élément $EG_{3,50}$ n'est pas visible dans l'interface graphique dans l'état de la figure 20.

Sur la figure 20, l'élément $EG_{4,53}$ est sélectionné, tel que cela est symbolisé par un contour en trait interrompu. A ce moment, un menu de commande 85 affiche la liste des autres contextes dans lesquels l'entité $E_{40}$ peut être consultée, c'est-à-dire le contexte « jeudi ». Ce menu est créé à l'aide des références figurant dans le champ LR de l'entité numérique représentée par l'élément graphique.

Lorsqu'en partant de cet état un utilisateur souhaite consulter l'entité $E_{40}$ dans le contexte « jeudi », il sélectionne le contexte « jeudi », par exemple par un clic de souris. A ce moment, l'élément graphique $EG_{3,50}$ s'affiche sur l'écran à la place de l'élément graphique $EG_{3,51}$ de manière à rendre visible l'élément graphique $EG_{4,59}$ représentant la même entité $E_{40}$ que l'élément sélectionné.

De préférence, la taille et la position du nouvel élément graphique $EG_{4,50}$ qui prend la place de l'élément graphique sélectionné $EG_{4,53}$ sont identiques à la taille et la position de l'élément $EG_{4,53}$ avant le changement de contexte. Pour cela, il peut être nécessaire d'effectuer automatiquement des opérations dans l'élément graphique constituant le nouveau contexte, par exemple des opérations de repliement ou de zoom. Dans l'exemple représenté, la place restante dans la zone de contenu de l'élément $EG_{3,50}$ est utilisée pour afficher un autre élément graphique « jeudi 27 mai 04 ». La figure 21 montre l'interface graphique après l'opération de changement de contexte. L'élément $EG_{4,59}$ nouvellement affiché est automatiquement sélectionné, donc le menu 85 affiche l'autre contexte « semaine 21 ». En outre, les éléments repliés étant nombreux, par exemple tous les jeudi de l'année exceptés ceux qui sont dépliés, ils ne peuvent pas être affichés simultanément de manière visible dans la portion réservée de la zone de contenu de l'élément $EG_{3,50}$. Dans ce cas, des flèches 90 et 91 de défilement sont prévues pour parcourir la liste des éléments repliés.

Il est ainsi possible de « sauter » de la représentation d'une entité numérique dans un contexte particulier à la représentation de cette entité numérique dans n'importe lequel des contextes alternatifs qui la référencent.

## Options d'affichage

Dans l'interface représentée sur les figures 20 à 22, deux modes d'affichage sont en général prévus pour un élément graphique EG dans un état déplié : un mode fermé dans lequel la couverture, c'est-à-dire les données de contenu figurant dans le champ 36 de l'entité numérique correspondante recouvre tout l'intérieur de la zone de contenu et masque les éventuels éléments graphiques enfants disposés à l'intérieur et un mode ouvert dans lequel la couverture n'est pas affichée et les éléments graphiques enfants sont juxtaposés à l'intérieur de la zone de contenu de l'élément graphique EG, eux-mêmes pouvant être ouverts ou fermés.

La figure 22 montre l'interface graphique dans un état obtenu à partir de la figure 20 en dépliant tous les éléments enfants de l'éléments $EG_{3,51}$ et en les plaçant dans l'état fermé. Ainsi, l'élément $EG_{3,51}$, les élément $EG_{4,50}$ à $EG_{4,57}$ sont représentés fermés. Par exemple, chaque couverture comporte le titre de l'entité numérique correspondante. On notera que sur la figure 22, la couverture recouvre la zone de contenu et la barre de titre de l'élément graphique. Dans ce cas, une commande d'ouverture est prévue avec la souris, par exemple en cliquant sur la couverture. En variante, l'état fermé peut être défini de manière que la barre de titre, ainsi que les boutons de commande prévus sur la barre de titre, soient visible lorsque l'élément graphique est dans un état fermé. Dans ce cas, un bouton de commande d'ouverture (non représenté) est prévu sur chaque élément graphique pour permettre l'ouverture de la couverture.

Lorsqu'un utilisateur actionne le bouton de l'élément $EG_{4,53}$, par exemple à l'aide du curseur de la souris, la couverture $K_{4,53}$ n'est plus affichée et l'élément graphique $EG_{4,53}$ affiche les éléments graphiques $EG_{5,50}$ et $EG_{5,51}$. L'élément graphique $EG_{4,53}$ est alors affiché dans un état ouvert tel qu'il est représenté sur la figure 21, mais en gardant sa taille représentée à la figure 22. En variante, l'ouverture de la couverture peut également être commandée par un clic de souris sur la barre de titre ou sur une autre zone de l'élément graphique.

La fonction du logiciel qui permet l'ouverture des couvertures est de préférence désactivée pour les éléments graphiques ne contenant pas d'éléments graphiques, c'est-à-dire les feuilles de l'arbre de la figure 17.

D'autres variantes sont possibles, par exemple chaque entité E peut contenir dans les champs PA des paramètres de taille DR et de coordonnées XR et YR qui correspondent à une taille et à des coordonnées par défaut pour représenter les entités enfants dans un état replié. Ces paramètres peuvent également être mémorisés dans un ou plusieurs fichiers prévus à cet effet.

On peut aussi prévoir une configuration par défaut $C_d$ dans laquelle certaines entités sont représentées dans un état replié. Pour cela, dans les champs PA de l'entité parente, on ajoute une donnée d'état, qui indique si l'entité enfant est représentée dans l'état replié ou déplié dans la configuration $C_d$. De même, on peut prévoir une configuration par défaut dans laquelle certaines entité sont ouvertes et d'autres fermées en prévoyant des données d'état dans les champs PA des entités. En outre, un élément graphique représentant une entité dans un état replié peut être de tout type, par exemple icône, bouton, onglet, etc.

Un procédé de tri des contextes peut être prévu pour trier les contextes associés à chaque entité, par exemple par date de dernière utilisation, de manière à afficher la liste des contextes dans un ordre déterminé. Un nombre maximal de contexte affichables dans le menu peut également être prédéterminé afin de limiter la taille du menu.

Dans la configuration $C_d$ résultant des paramètres d'affichage par défaut, la contrainte de non recouvrement peut être remplacée par toute autre disposition, par exemple un affichage « en cascade » des éléments graphiques frères.

Les fonctions de navigation décrites ci-dessus, à savoir les fonctions de repliement, dépliement, zoom et projection sont locales à un élément graphique parent, lequel délimite une zone de l'interface graphique dans laquelle l'affichage est modifié par l'exécution de la fonction. Ces fonctions peuvent être mises en oeuvre de manière similaire dans une zone d'affichage donnée d'un écran, sans que cette zone soit nécessairement délimitée par un élément graphique. De plus, les fonctions peuvent être appliquées à des éléments graphiques, notamment des fenêtres rectangulaires, qui sont générées autrement que selon le procédé de génération décrit plus haut. En particulier, l'homme du métier sait générer des éléments graphiques affichables de manière juxtaposée sur un écran sans nécessairement partir d'un ensemble d'entités numériques structuré à l'aide de références mutuelles entre ces entités. Les procédés de dépliement, repliement, de zoom et de projection peuvent donc être utilisés indépendamment de l'organisation sous forme de graphe latticiel des entités. Par exemple, ces procédés peuvent être utilisés pour gérer l'affichage sur un unique écran des images transmises par plusieurs caméras de surveillance. Dans ce cas, un élément graphique est formé à partir des images transmises par chaque caméra. Lorsque le gardien souhaite agrandir l'image provenant d'une caméra, par exemple, ces procédés permettent de réaliser cette tâche de manière automatique.

Des étapes des procédés décrits précédemment peuvent être effectuées simultanément ou dans un ordre différent sans modifier le résultat.

La représentation de la figure 14 vise à mettre en évidence l'unité fonctionnelle des données constituant une entité numérique et non une localisation particulière de ces données les unes par rapport aux autres. Ces données qui servent ensemble à définir la représentation d'un contenu (le contenu cognitif de l'entité) et la représentation de contenus associés (entités désignées) à l'écran peuvent être organisées de multiples façons dans la mémoire ou le support d'enregistrement qui les contient, notamment sous la forme d'une structure de données déclarée, d'un fichier, de plusieurs fichiers présentant les liens logiques nécessaires, etc.

Bien que l'invention ait été décrite en relation avec plusieurs modes de réalisations particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

**1.** Procédé d'affichage d'un ensemble d'éléments graphiques destinés à représenter un contenu cognitif (EG) sur un moyen d'affichage (2), **caractérisé en ce qu'**il comprend les étapes consistant à :

a. Afficher lesdits éléments graphiques dans une zone d'affichage déterminée dudit moyen d'affichage dans une configuration initiale comportant une position initiale de chaque élément graphique ;

b. Recevoir une commande de sélection portant sur un élément graphique affiché dans ladite zone d'affichage et désigner un ensemble à redimensionner comprenant au moins un desdits éléments graphiques en fonction de ladite commande de sélection ;

c. Déterminer une nouvelle configuration desdits éléments graphiques, ladite nouvelle configuration comportant une position de chaque élément graphique dudit ensemble à redimensionner dans ladite zone d'affichage ;

d. redimensionner chaque élément graphique dudit ensemble à redimensionner de manière que ledit ensemble à redimensionner dans la nouvelle configuration déterminée à l'étape c) remplisse au moins l'une des dimensions de ladite zone d'affichage tout en restant entièrement affiché dans ladite zone d'affichage.

2. Procédé selon la revendication 1, **caractérisé en ce que** lorsque ledit ensemble à redimensionner comporte plusieurs éléments graphiques, ladite nouvelle configuration est définie de manière que chaque élément graphique dudit ensemble à redimensionner soit adjacent à au moins un autre desdits éléments graphiques dudit ensemble à redimensionner.

3. Procédé selon la revendication 1 ou 2, ledit ensemble à redimensionner comportant un nombre N d'éléments graphiques, **caractérisé en ce que** l'étape c) comprend une étape e) consistant à former un ensemble de configurations de rang $N(C_N)$, chacune desdites configurations de rang N comportant une position de chacun des N éléments graphiques (EG) dudit ensemble à redimensionner dans ladite zone d'affichage, et une étape f) consistant à sélectionner (121) ladite nouvelle configuration $(C_{3,m})$ dans ledit ensemble de configurations de rang N.

4. Procédé selon la revendication 3, dans lequel ladite zone d'affichage est rectangulaire, **caractérisé en ce que** l'étape f) comprend les étapes consistant à, déterminer (115), pour chacune desdites configurations de rang N $(C_{3,m}, C_{3,m+1})$, un rectangle $(R_m, R_{m+1})$ circonscrivant lesdits éléments graphiques $(EG_{n,2}C_{3,m}, EG_{n,3}C_{3,m}, EG_{n,4}C_{3,m}, EG_{n,2}C_{3,m+1}, EG_{n,3}C_{3,m+1}, EG_{n,4}C_{3,m+1})$ dudit ensemble à redimensionner positionnés dans ladite configuration de rang N $(C_{3,m}, C_{3,m+1})$, calculer pour chaque configuration de rang N un rapport de largeur $(\rho_{Lm}, \rho_{Lm+1})$ entre la largeur de ladite zone d'affichage et la largeur dudit rectangle et un rapport de hauteur $(\rho_{Rm}, \rho_{Rm+1})$ entre la hauteur de ladite zone d'affichage et la hauteur dudit rectangle, déterminer, pour chaque configuration de rang N, un rapport minimum $(\rho_{min,m}, \rho_{min,m+1})$ parmi ledit rapport de largeur et ledit rapport de hauteur de ladite configuration de rang N, et sélectionner comme nouvelle configuration la configuration de rang N dont ledit rapport minimum est maximal.

5. Procédé selon la revendication 3 ou 4, **caractérisé en ce que** l'étape e) comprend les étapes consistant, pour un entier k allant successivement de 0 à N-1,

m) sélectionner (103) une configuration de rang k déjà formée, chaque configuration interne de rang k étant définie par un k-uplet de positions associées respectivement à k éléments graphiques de ladite zone d'affichage,

g) sélectionner (100) un k+1ième élément graphique dans ledit ensemble à redimensionner qui n'est pas positionné dans ladite configuration de rang k sélectionnée,

h) sélectionner (106) au moins une position pour le k+1ième élément graphique dans ladite zone d'affichage,

i) former au moins une configuration interne de rang k+1 en combinant ladite au moins une position sélectionnée pour le k+1ième élément graphique avec ladite configuration de rang k sélectionnée.

6. Procédé selon la revendication 5, les éléments graphiques étant des polygones, **caractérisé en ce que** l'étape h) comprend les étapes consistant à sélectionner (105) un sommet d'un des k éléments graphiques positionnés dans ladite configuration de rang k, la position du k+1ième élément graphique étant sélectionnée en positionnant un sommet dudit k+1ième élément graphique sur ledit sommet sélectionné de manière qu'un bord dudit k+1ième élément graphique se trouve le long d'un bord dudit élément graphique auquel appartient ledit sommet sélectionné et que ledit k+1ième élément ne chevauche pas ledit élément graphique auquel appartient ledit sommet sélectionné.

7. Procédé selon l'une quelconque des revendications 5 à 6, **caractérisé en ce que** l'étape e) comprend une étape consistant à éprouver (107), pour chaque configuration de rang i ayant été formée, i étant un entier compris entre 1 et N, une condition d'affichage, et une étape consistant à effacer (109A) ladite configuration de rang i si ladite condition d'affichage n'est pas vérifiée, ladite condition d'affichage incluant une condition de non-chevauchement qui est vérifiée lorsque aucun élément graphique positionné dans ladite configuration de rang i ne chevauche un autre élément graphique positionné dans ladite configuration de rang i.

8. Procédé selon l'une quelconque des revendications 5 à 7, **caractérisé en ce que** l'étape e) comprend une étape consistant à éprouver (107), pour chaque configuration de rang i ayant été formée, i étant un entier compris entre 1 et N, une condition d'affichage, et une étape consistant à effacer (109A) ladite configuration de rang i si ladite condition d'affichage n'est pas vérifiée, ladite condition d'affichage incluant une condition d'angle qui est vérifiée lorsque l'angle entre la droite reliant le centre d'un premier élément graphique positionné dans ladite configuration de rang i et le centre d'un deuxième élément graphique positionné dans ladite configuration de rang i et la droite reliant le centre dudit deuxième élément graphique positionné dans ladite configuration de rang i et le centre dudit premier élément graphique à ladite position initiale est inférieur à un angle S prédéterminé.

9. Procédé selon la revendication 8, **caractérisé en ce qu'**il comprend les étapes consistant à éprouver une condition d'existence de configuration qui est vérifiée lorsque l'ensemble des configurations de rang N obtenu à l'issue de l'étape e) est non vide, et si la condition de configuration n'est pas vérifiée, augmenter la valeur de l'angle S et répéter l'étape e).

10. Procédé selon l'une quelconque des revendications 1 à 9, dans lequel chaque élément graphique est affichable dans un état réduit prédéterminé et dans un état déployé, **caractérisé en ce que** lorsque ladite commande de sélection porte sur un élément graphique affiché dans ledit état déployé dans ladite zone d'affichage à l'étape a), il comporte l'étape consistant à réduire (99) ledit élément graphique sélectionné, de manière que ledit élément graphique sélectionné apparaisse dans ledit état réduit prédéterminé, ledit ensemble à redimensionner étant désigné comme l'ensemble constitué du ou des élément (s) graphique(s) affiché(s) dans l'état déployé contenu(s) dans ladite zone d'affichage à l'étape a) et autre(s) que ledit élément graphique sélectionné.

11. Procédé selon l'une quelconque des revendications 1 à 10, dans lequel chaque élément graphique est affichable dans un état réduit prédéterminé et dans un état déployé, **caractérisé en ce que** lorsque la commande de sélection porte sur un élément graphique affiché dans ledit état réduit dans ladite zone d'affichage à l'étape a), ledit ensemble à redimensionner est désigné comme l'ensemble constitué d'une part du ou des élément(s) graphique(s) affiché (s) dans l'état déployé contenu(s) dans ladite zone d'affichage à l'étape a) et d'autre part dudit élément graphique sélectionné, ledit élément graphique sélectionné étant affiché dans l'état déployé dans ladite nouvelle configuration.

12. Procédé selon la revendication 1, dans lequel l'ensemble à redimensionner comprend ledit élément graphique sélectionné, **caractérisé en ce que** les étapes c) et d) sont réalisées sous la forme d'une séquence de sous-étapes, chaque sous-étape de la séquence comprenant une étape j) consistant à déterminer un nombre maximum Z d'itérations tel que les dimensions (d) de l'élément graphique sélectionné multipliées par un coefficient d'agrandissement C prédéterminé élevé à la puissance Z soient inférieures ou égales aux dimensions correspondantes de ladite zone d'affichage, de manière que ledit élément graphique sélectionné puisse être entièrement affiché dans ladite zone d'affichage, et chaque sous-étape de la séquence comprenant une étape k) consistant si le nombre Z est positif, à multiplier (205) les dimensions dudit élément graphique par ledit coefficient d'agrandissement C, à déterminer une distance D entre le centre dudit élément graphique sélectionné et le centre de ladite zone d'affichage et à rapprocher le centre dudit élément graphique du centre de ladite zone d'affichage d'une distance sensiblement égale à la distance D divisée par le nombre maximum Z.

13. Procédé selon la revendication 12, **caractérisé en ce que** chaque sous-étape de la séquence est effectuée en réponse à la réception d'une commande venant d'un périphérique d'entrée.

14. Procédé selon l'une quelconque des revendications 1 à 13, **caractérisé en ce que** lesdits éléments graphiques comportent à chaque fois une zone de contenu convenant pour afficher un contenu cognitif et, qu'à l'étape d) tout le contenu de la zone de contenu d'un élément graphique dudit ensemble à redimensionner est redimensionné dans les mêmes proportions que ledit élément graphique.

15. Procédé selon l'une quelconque des revendications 1 à 14, **caractérisé en ce qu'**à l'étape d) chaque élément graphique est redimensionné sans déformation.

16. Programme d'ordinateur comportant des codes d'instructions aptes à être lus ou écrits sur un support et aptes à être exécutés par une machine numérique pour mettre en oeuvre les étapes consistants à :

- mettre à disposition de ladite machine numérique un ensemble d'éléments graphiques affichables à l'intérieur d'une zone d'affichage déterminée d'un moyen d'affichage dans une configuration initiale comportant une position initiale de chaque élément graphique dans ladite zone d'affichage ;
- recevoir une commande de sélection portant sur un des éléments graphiques depuis un périphérique d'entrée dudit ordinateur et désigner un ensemble à redimensionner comprenant au moins un desdits éléments graphiques en réponse à ladite commande ;
- déterminer une nouvelle configuration desdits éléments graphiques, ladite nouvelle configuration comportant une position de chaque élément graphique dudit ensemble à redimensionner dans ladite zone d'affichage avec un dimensionnement de chaque élément graphique dudit ensemble à redimensionner, de manière que ledit ensemble à redimensionner dans ladite nouvelle configuration remplisse au moins l'une des dimensions de ladite zone d'affichage tout en restant entièrement affichable dans ladite zone d'affichage.

FIG.1

FIG.2

FIG.3

FIG.4

234 — | $r_1, d1_1, X_{RO1}, Y_{RO1}$ | ⟵ $E_1$

37 — | $N_1$ |

38 — | $K_1$ |

39 — | |

| $E_2, E_3$ | ⟵ REF

| $D_{E2, E1}$ |

| $X_{E2,E1}, Y_{E2,E1}$ |

| $D_{E3,E1}$ |

| $X_{E3,E1}, Y_{E3,E1}$ |

| $EG_{1,1}$ | ⟵ LR

PA

## FIG.14

## FIG.5

$EG_{2,1}$

| $EG_{1,1}$ | ⟵ 30 |
| $E_2$ | ⟵ 31 |
| $d$ | ⟵ 33 |
| $x, y$ | ⟵ 34 |
| $EG_{3,1}$ | |
| $EG_{3,2}$ | ⟵ 35 |
| $X_{RO2,1}, Y_{RO2,1}, H_{RO2,1},$ $D_{RO2,1}, Z_{RO2,1}, Y_{RO2,1}$ | ⟵ 235 |

## FIG.15

FIG.6

FIG.7

FIG.8

FIG.9d

FIG.9e

FIG.9f

FIG.9a

FIG.9b

FIG.9c

C 2,7

EGn.2 C1,1

EGn.3 C2,7

FIG.9g

EGn.4 Cd

95

EGn.4 C3,1

β

EGn.3 C2,2

α

EGn.2 C2,2

EGn.4 C3,2

60  69

FIG.10a

C 2,8

EGn2 C1,1

EGn.3 C2,8

FIG.9h

EGn.4 C3,2   EGn.3 C3,2

C3,2

EGn.2 C3,2

R2

FIG.10b

EP 1 717 673 A1

33

FIG.11

FIG.12

FIG.13

EG$_{3,1}$     EG$_{3,2}$

EG$_{1,1}$

## FIG.16

400

401

404

405

## FIG.18

FIN

500

501

504

505

## FIG.19

FIN

240   261     232     F$_{10}$

F$_{13}$

251

231

260

250

233

F$_{11}$

241   230     F$_{12}$

## FIG.23

FIG.17

EP 1 717 673 A1

84 — 85 — EG$_{1,50}$ — EG$_{2,50}$ — 82

**Cartable**

Calendrier → Semaine 21          jeudi

80

81 — EG$_{4,53}$ — EG$_{4,54}$ — 83

lundi 17 mai   mardi 18 mai   mercredi 19 mai   samedi 22 mai   dimanche 23 mai

Chimie
Physique

jeudi 20 mai 04

vendredi 21 mai 04

**FIG. 20**

**Cartable**

Calendrier → jeudi                    Sem. 21

90                                                91

jeudi 6 mai   jeudi 13 mai      jeudi 3 mai   jeudi 10 mai   jeudi 17 mai

Chimie
Physique

jeudi 20 mai 04

jeudi 27 mai 04

**FIG. 21**

**Cartable**

Calendrier → Semaine 21

Chimie
Physique

lundi 17 mai 04      mardi 18 mai 04      mercredi 19 mai 04

jeudi 20 mai 04      vendredi 21 mai 04      samedi 22 mai 04

dimanche 23 mai 04

**FIG. 22**

**Office européen**

**des brevets**

## RAPPORT DE RECHERCHE EUROPEENNE

Numéro de la demande

EP 05 29 0953

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (IPC) |
| X | COHEN E S ET AL: "Automatic strategies in the Siemens RTL tiled window manager" COMPUTER WORKSTATIONS, 1988., PROCEEDINGS OF THE 2ND IEEE CONFERENCE ON SANTA CLARA, CA, USA 7-10 MARCH 1988, WASHINGTON, DC, USA,IEEE COMPUT. SOC. PR, US, 7 mars 1988 (1988-03-07), pages 111-119, XP010011385 ISBN: 0-8186-0810-2 * le document en entier * * voir en particulier les sections 2.2, 3 à 5 et 7.2 * | 1-16 | INV. G06F3/033 |
| A | CANON: "Canon Utilities ZoomBrowser EX - Software User Guide" 2003, , XP002378117 Téléchargeable à partir de: http://www.canon.co.jp/Imaging/SOFT_CMP/ZB _SDv12/PDF/V12_ZBEX_144dpi-e.pdf * page 26 * | 1-16 | |
| | | | DOMAINES TECHNIQUES RECHERCHES (IPC) |
| | | | G06F |

Le présent rapport a été établi pour toutes les revendications

| Lieu de la recherche | Date d'achèvement de la recherche | Examinateur |
|---|---|---|
| Berlin | 25 avril 2006 | Munnix, S |